# EUROPEAN PATENT APPLICATION

(11) **EP 4 517 503 A1**
(43) Date of publication of application: **05.03.2025**
(21) Application number: 23796096.8
(22) Date of filing: 11.04.2023
(51) Int. Cl.: G06F 3/04845, G06F 3/0481, G06F 3/0488, G09G 5/00, G09G 5/37, G09G 5/373, G09G 5/38

(54) **INFORMATION PROCESSING DEVICE, INFORMATION PROCESSING METHOD, AND PROGRAM**

(30) Priority: 27.04.2022 JP 2022073022
(71) Applicant: Sony Group Corporation, Tokyo 108-0075 (JP)
(72) Inventor: MATSUMOTO, Shota, Tokyo 108-0075 (JP); MURAMATSU, Seiji, Tokyo 108-0075 (JP); ADACHI, Hiroaki, Tokyo 108-0075 (JP); MURAKAMI, Yukako, Tokyo 108-0075 (JP)
(74) Representative: D Young & Co LLP
(86) International application number: PCT/JP2023/014733
(87) International publication number: WO 2023/210352

(57) **Abstract**

An information processing apparatus includes: a display control unit that displays a window which is resizable on a touch panel display; a setting unit that sets adjustment areas for size adjustment of the window through a touch operation at positions of at least four corners of the window, and sets one of the four corners of the window as a fixed corner for the size adjustment; and an adjustment unit that performs processing for the size adjustment of the window in response to a touch operation of a user in an adjustment area associated with a diagonal corner of the fixed corner, in which, when the user slides a touch position to an adjustment area associated with another corner, the setting unit changes setting of the fixed corner to a diagonal corner of the other corner.

## Description

### Field

The present disclosure relates to an information processing apparatus, an information processing method, and a program.

### Background

In recent years, information processing apparatuses (e.g., smartphones) having a touch panel display have been actively developed. In many cases, these information processing apparatuses can display a resizable window on the touch panel display.

### Citation List

### Patent Literature

Patent Literature 1: WO 2020/170461

### Summary

### Technical Problem

In many cases, the size of a window displayed on a non-touch panel display is changed by a user dragging a handle for size adjustment arranged at a corner of the window with a mouse. In contrast, the size of a window displayed on a touch panel display is changed by a user performing a touch operation on a handle (touch area) for size adjustment arranged at a corner of the window. In the touch operation, a target portion on a display cannot be dragged with pinpoint accuracy. Therefore, the size adjustment performed by a touch operation may cause inconvenience to the user.

For example, when a mouse is used to change the size of the window, the user can drag the target portion with pinpoint accuracy. Therefore, the size of the handle can be reduced. When the size of the window is changed by a touch operation, however, a finger of the user touches a certain area of the display. Therefore, the size of the handle needs to be increased to some extent in order to prevent an erroneous operation. In this case, the user cannot perform a touch operation on a user interface (UI) visible behind the handle, which causes inconvenience.

Therefore, the present disclosure proposes an information processing apparatus, an information processing method, and a program with high convenience.

### Solution to Problem

In order to solve the above problem, an information processing apparatus according to one embodiment of the present disclosure includes: a display control unit that displays a window which is resizable on a touch panel display; a setting unit that sets adjustment areas for size adjustment of the window through a touch operation at positions of at least four corners of the window, and sets one of the four corners of the window as a fixed corner for the size adjustment; and an adjustment unit that performs processing for the size adjustment of the window in response to a touch operation of a user in an adjustment area associated with a diagonal corner of the fixed corner, wherein, when the user slides a touch position to an adjustment area associated with another corner, the setting unit changes setting of the fixed corner to a diagonal corner of the other corner.

### Brief Description of Drawings

FIG. 1 illustrates a resizable window TW displayed on a touch panel display.
FIG. 2 illustrates the resizable window TW displayed on a non-touch panel display.
FIG. 3 illustrates the resizable window TW displayed on a touch panel display.
FIG. 4 illustrates a handle for size adjustment embedded in a UI bar.
FIG. 5 outlines a solution of an embodiment.
FIG. 6 illustrates a configuration example of a terminal device according to the embodiment of the present disclosure.
FIG. 7 illustrates one example of an external appearance of the terminal device.
FIG. 8 illustrates the window displayed on a screen.
FIG. 9 illustrates how the window moves.
FIG. 10 illustrates how the window horizontally moves in a case where a display screen is in a vertical state.
FIG. 11 illustrates how the window horizontally moves in a case where the display screen is in the vertical state.
FIG. 12 illustrates how the window vertically moves in a case where the display screen is in the vertical state.
FIG. 13 illustrates how the window horizontally moves in a case where the display screen is in a horizontal state.
FIG. 14 outlines a size adjustment operation of the window.
FIG. 15 illustrates a size adjustment operation of Pattern 1.
FIG. 16A illustrates a size adjustment operation in an adjustment area A.
FIG. 16B illustrates a size adjustment operation in an adjustment area B.
FIG. 16C illustrates a size adjustment operation in an adjustment area C.
FIG. 16D illustrates a size adjustment operation in an adjustment area D.
FIG. 16E illustrates a size adjustment operation in an adjustment area E.
FIG. 16F illustrates a size adjustment operation in an adjustment area F.
FIG. 16G illustrates a size adjustment operation in an adjustment area G.
FIG. 16H illustrates a size adjustment operation in an adjustment area H.
FIG. 16I illustrates a size adjustment operation in an adjustment area I.
FIG. 17 illustrates a size adjustment operation of Pattern 2.
FIG. 18A illustrates a size adjustment operation in an adjustment area A.
FIG. 18B illustrates a size adjustment operation in an adjustment area B.
FIG. 18C illustrates a size adjustment operation in an adjustment area C.
FIG. 18D illustrates a size adjustment operation in an adjustment area D.
FIG. 18E illustrates a size adjustment operation in an adjustment area E.
FIG. 18F illustrates a size adjustment operation in an adjustment area F.
FIG. 18G illustrates a size adjustment operation in an adjustment area G.
FIG. 18H illustrates a size adjustment operation in an adjustment area H.
FIG. 18I illustrates a size adjustment operation in an adjustment area I.
FIG. 19 illustrates a size adjustment operation of Pattern 3.
FIG. 20A illustrates a size adjustment operation in an adjustment area A.
FIG. 20B illustrates a size adjustment operation in an adjustment area B.
FIG. 20C illustrates a size adjustment operation in an adjustment area C.
FIG. 20D illustrates a size adjustment operation in an adjustment area D.
FIG. 20E illustrates a size adjustment operation in an adjustment area E.
FIG. 20F illustrates a size adjustment operation in an adjustment area F.
FIG. 20G illustrates a size adjustment operation in an adjustment area G.
FIG. 20H illustrates a size adjustment operation in an adjustment area H.
FIG. 20I illustrates a size adjustment operation in an adjustment area I.
FIG. 21 illustrates one example of highlight.
FIG. 22 illustrates another example of the highlight.
FIG. 23 illustrates another example of the highlight.
FIG. 24 outlines size adjustment method guidance processing.
FIG. 25 is a flowchart illustrating the size adjustment method guidance processing.
FIG. 26 illustrates one example of guidance display for guiding a size adjustment method to a user.

### Description of Embodiments

An embodiment of the present disclosure will be described in detail below with reference to the drawings. Note that, in the following embodiment, the same reference signs are attached to the same parts to omit duplicate description.

Furthermore, the present disclosure will be described in accordance with the following item order.
1. Outline of Embodiment
2. Configuration of Terminal Device
3. Example of Basic Display Control of Window
3-1. Display Example of Window
3-2. Change in Display Mode Depending on Position of Window
4. Operation of Terminal Device
4-1. Outline of Size Adjustment Operation
4-2. Size Adjustment Operation (Pattern 1)
4-3. Size Adjustment Operation (Pattern 2)
4-4. Size Adjustment Operation (Pattern 3)
4-5. Highlight
4-6. Guidance of Size Adjustment Method
5. Variations
6. Conclusion

### <<1. Outline of Embodiment>>

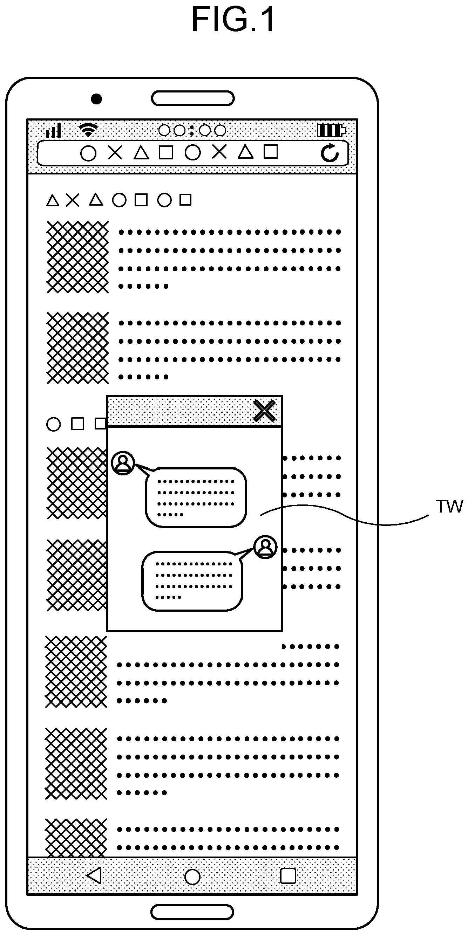

In many cases, an information processing apparatus having a touch panel display such as a smartphone can display a resizable window on the display. FIG. 1 illustrates a resizable window TW displayed on a touch panel display.

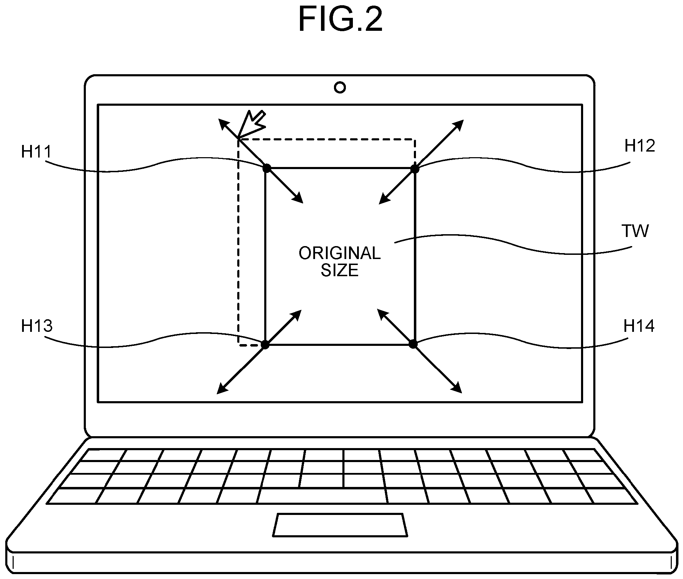

FIG. 2 illustrates the resizable window TW displayed on a non-touch panel display. In many cases, handles H11 to H14 for size adjustment are arranged at four corners of the window TW on the non-touch panel display. In many cases, the size of the window TW displayed on the non-touch panel display is adjusted by a user dragging and moving one of the handles H11 to H14 with a mouse. The mouse enables the user to drag a target portion with pinpoint accuracy. Therefore, in a case of size adjustment using a mouse, the handles for size adjustment need a small size. In the example of FIG. 2, each of the handles H11 to H14 for size adjustment has a small size of a dot.

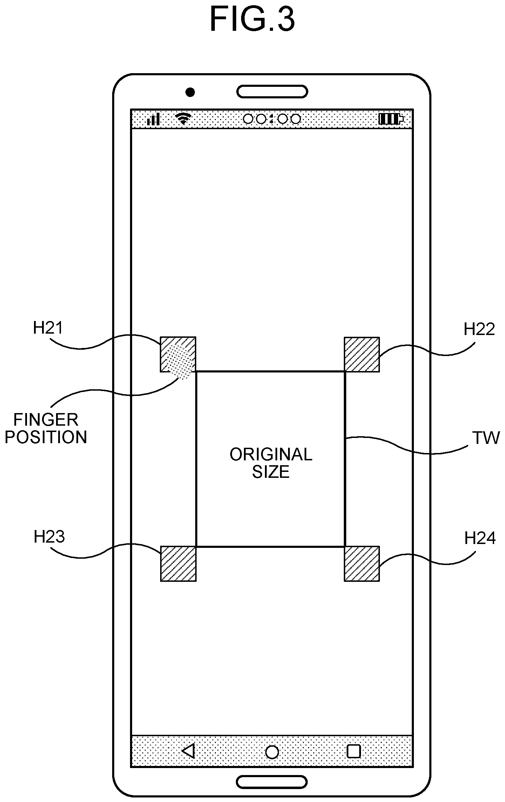

FIG. 3 illustrates the resizable window TW displayed on the touch panel display. Also in the window TW on the touch panel display, handles (touch areas) H21 to H24 for size adjustment are arranged at the four corners as invisible operation blocks. In this case, the user adjusts the size of the window TW by touching one of the handles H21 to H24 and sliding his/her finger to a target position as it is. In the touch operation, the finger of the user touches a certain area of the display. In order to prevent an erroneous operation, the sizes of the handles H21 to H24 for size adjustment need to be increased to some extent. For example, the sizes of the handles H21 to H24 are desirably approximately 10 mm × 10 mm (at least approximately 7 mm × 7 mm).

The handles H21 to H24 for size adjustment are transparent operation blocks invisible to the user. Therefore, the user can see a user interface (UI) such as an icon behind the handles H21 to H24. Large sizes of the handles H21 to H24 for size adjustment prevent the user from performing a touch operation on the UI even when the user can see the UI behind the handles H21 to H24. Therefore, the user feels inconvenience.

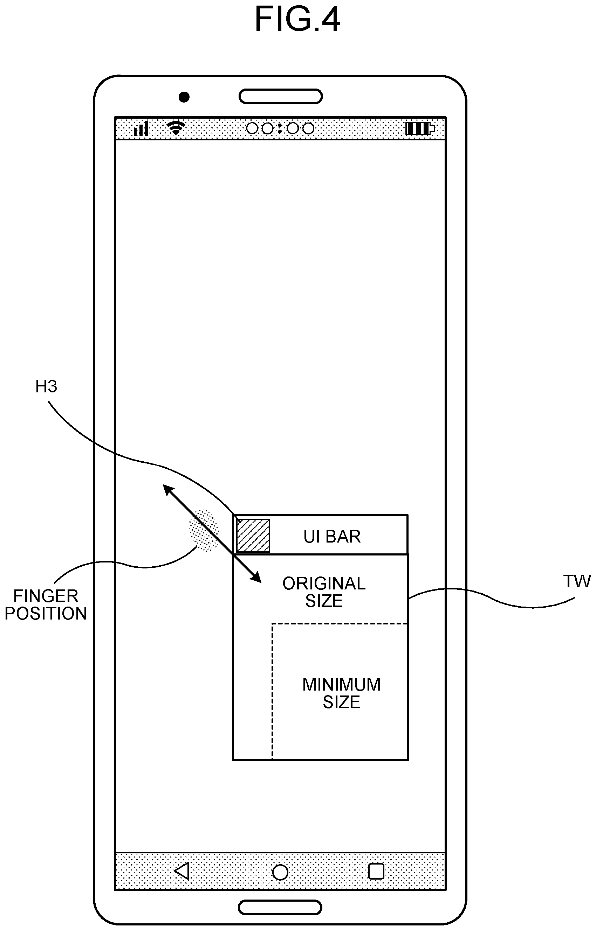

Embedding a handle for size adjustment in a UI bar is a possible method of solving the problem. FIG. 4 illustrates a handle H3 for size adjustment embedded in a UI bar. The information processing apparatus automatically places the handle H3 at only one corner in a direction in which the user is highly likely to change the size depending on the position of the window TW in a screen. In the example of FIG. 4, the window TW is located on a lower right side of the screen. Therefore, the information processing apparatus arranges the UI bar in an upper direction of the window TW, and arranges the handle H3 for size change at an upper left corner. Note that the window TW may have a minimum size limitation in order to prevent the window TW from being lost. The minimum size window may be, for example, a square window.

In the case of the solution method, the handle H3 for size adjustment is embedded in the UI bar, so that an invisible operation block is not generated. Therefore, unnecessary functions and displays do not take up the screen. Furthermore, the solution method has an advantage that a mode change for size adjustment is unnecessary (i.e., the user can adjust the size of the window TW by one action). In contrast, the solution method has a disadvantage that, even when a size in a direction of a corner at which the handle H3 is arranged can be adjusted, the sizes in other three directions cannot be changed.

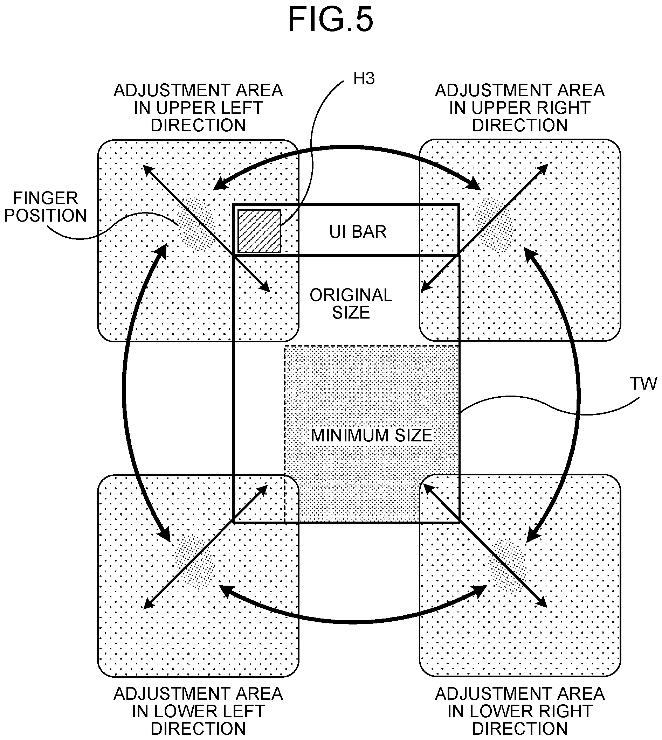

Therefore, in the embodiment, the size change in the other three directions is made possible while the advantage of the above-described solution method is maintained. FIG. 5 outlines a solution of the embodiment.

The information processing apparatus according to the embodiment sets adjustment areas for adjusting the size of the window TW at positions of at least four corners of the window TW. In the example of FIG. 5, the information processing apparatus sets an upper left direction adjustment area at a position of an upper left corner of the window TW, an upper right direction adjustment area at a position of an upper right corner of the window TW, a lower left direction adjustment area at a position of a lower left corner of the window TW, and a lower right direction adjustment area at a position of a lower right corner of the window TW.

The information processing apparatus sets one of the four corners of the window TW as a catch corner, and sets a diagonal corner thereof as a fixed corner (anchor) for size adjustment in response to a touch operation of the user. The catch corner is a corner dragged by the touch operation of the user. For example, when the user touches the handle H3 displayed on the UI bar, the information processing apparatus sets the upper left corner of the window TW as a catch corner, and sets the lower right corner, which is a diagonal corner thereof, as a fixed corner. The information processing apparatus performs processing for adjusting the size of the window TW in response to a touch operation (e.g., finger slide on touch panel) of the user in the adjustment area at the catch corner (diagonal corner of fixed corner). For example, the information processing apparatus changes the size of the window TW with the lower right corner as an anchor in response to a touch operation (finger slide) of the user in the upper left direction adjustment area at the upper left corner.

In the case, when the user keeps his/her finger touching the display and slides the touch position to an adjustment area at another corner, setting of a catch corner is changed to the other corner, and setting of a fixed corner is changed to the diagonal corner of the other corner. For example, when the user slides his/her finger from the upper left adjustment area to the lower left adjustment area, setting of the catch corner is changed from the upper left corner to the lower left corner, and setting of the fixed corner is changed from the lower right corner to the upper right corner. Then, the information processing apparatus changes the size of the window TW with the lower right corner as an anchor in response to a touch operation (finger slide) of the user in the upper left direction adjustment area at the upper left corner.

This prevents the generation of an invisible operation block, and prevents unnecessary functions and displays from taking up the screen. Furthermore, a mode change for size adjustment is unnecessary. Moreover, the user can not only adjust the size in a direction of a corner at which the handle H3 is arranged but change the sizes in the other three directions.

Although the embodiment has been outlined above, a terminal device 10 according to the embodiment will be described in detail below.

### <<2. Configuration of Terminal Device>>

First, a configuration of the terminal device 10 will be described.

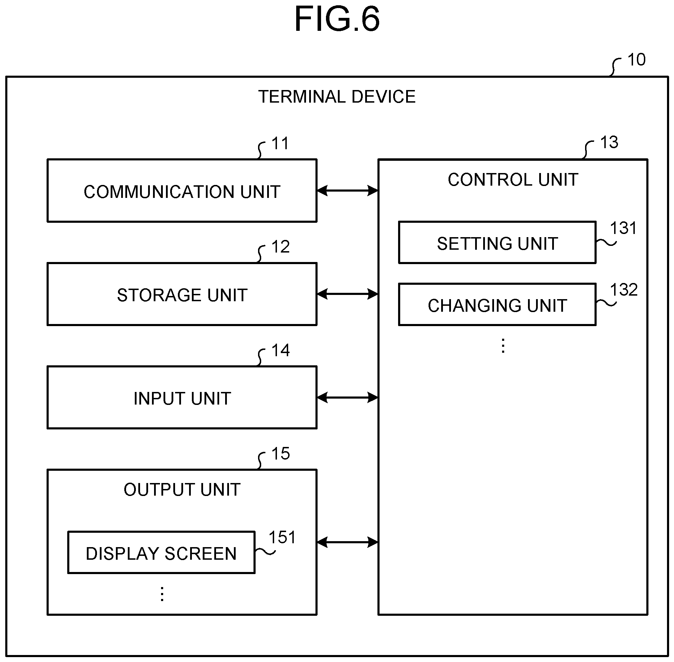

FIG. 6 illustrates a configuration example of the terminal device 10 according to the embodiment of the present disclosure. The terminal device 10 is an information processing apparatus (computer) possessed by the user. The terminal device 10 is connected to another communication device (e.g., server device) via a network.

Here, the network is a communication network such as a local area network (LAN), a wide area network (WAN), a cellular network, a fixed telephone network, a regional Internet protocol (IP) network, and the Internet. The network may include a wired network or a wireless network. Furthermore, the network may include a core network. The core network includes, for example, an evolved packet core (EPC) and a 5G core network (5GC). Furthermore, the network may include a data network other than the core network. The data network may be a service network of a telecommunications carrier, for example, an IP multimedia subsystem (IMS) network. Furthermore, the data network may be a private network, such as an intra-company network.

The terminal device 10 is typically a smart device (smartphone or tablet), but is not limited to the smart device. Any form of information processing apparatus (computer) can be adopted as the terminal device 10. For example, the terminal device 10 may be a mobile terminal such as a mobile phone, a smart device, a personal digital assistant (PDA), and a notebook PC. Furthermore, the terminal device 10 may be a wearable device such as a smart watch. In addition, the terminal device 10 may be a portable Internet of Things (IoT) device.

Note that the terminal device 10 may be an xR device such as an augmented reality (AR) device, a virtual reality (VR) device, and a mixed reality (MR) device. In the case, the xR device may be a glasses-type device such as AR glasses and MR glasses, or may be a head-mounted device such as a VR head-mounted display. When the terminal device 10 is an xR device, the terminal device 10 may be a standalone device including only a user wearing portion (e.g., glasses portion). Furthermore, the terminal device 10 may be a terminal interlocking device including the user wearing portion (e.g., glasses portion) and a terminal portion (e.g., smart device) interlocked with the portion.

As illustrated in FIG. 6, the terminal device 10 includes a communication unit 11, a storage unit 12, a control unit 13, an input unit 14, and an output unit 15. Note that FIG. 6 illustrates a functional configuration, and the hardware configuration may be different from the configuration. Furthermore, the functions of the terminal device 10 may be distributed and implemented in a plurality of physically separated configurations.

The communication unit 11 is a communication interface for communicating with another device. For example, the communication unit 11 is a local area network (LAN) interface such as a network interface card (NIC). The communication unit 11 may be a wired interface or a wireless interface.

When the communication unit 11 includes the wireless interface, the communication unit 11 may be connected to a network or another communication device by using radio access technology (RAT) such as long term evolution (LTE), new radio (NR), Wi-Fi, and Bluetooth (registered trademark). In the case, the communication device may be able to use different types of radio access technology. For example, the communication device may be able to use NR and Wi-Fi. Furthermore, the communication device may be able to use different types of cellular communication technology (e.g., LTE and NR). LTE and the NR are types of the cellular communication technology, and enable mobile communication of the communication device by arranging a plurality of areas covered by a base station in a cell shape. In addition, the terminal device 10 may be connectable to the network or the other communication device by using radio access technology other than LTE, NR, Wi-Fi, and Bluetooth.

The storage unit 12 is a data readable/writable storage device such as a dynamic random access memory (DRAM), a static random access memory (SRAM), a flash memory, and a hard disk. The storage unit 12 functions as a storage means of the terminal device 10.

The control unit 13 is a controller that controls each unit of the terminal device 10. The control unit 13 is implemented by a processor such as a central processing unit (CPU), a micro processing unit (MPU), and a graphics processing unit (GPU). For example, the control unit 13 is implemented by the processor executing various programs stored in a storage device in the terminal device 10 by using a random access memory (RAM) or the like as a work area. Note that the control unit 13 may be implemented by an integrated circuit such as an application specific integrated circuit (ASIC) and a field programmable gate array (FPGA). Any of the CPU, the MPU, the GPU, the ASIC, and the FPGA can be regarded as the controller.

The control unit 13 includes a setting unit 131 and a changing unit 132. The control unit 13 may include a display control unit that controls display on a screen in addition to these blocks. Each block (setting unit 131, changing unit 132, and display control unit) constituting the control unit 13 is a functional block having a function of the control unit 13. These functional blocks may be software blocks or hardware blocks. For example, each of the above-described functional blocks may be one software module implemented by software (including microprogram), or may be one circuit block on a semiconductor chip (die). Of course, each functional block may be one processor or one integrated circuit. The control unit 13 may include a functional unit different from the above-described functional blocks. Any method of constituting such a functional block can be adopted.

Note that the control unit 13 may include a functional unit different from the above-described functional blocks. Furthermore, another device may perform some or all of operations of the blocks (setting unit 131, changing unit 132, and display control unit) constituting the control unit 13. For example, a server device on a cloud may perform some or all of operations of the blocks constituting the control unit 13. The operations of the blocks constituting the control unit 13 will be described later.

The input unit 14 is an input device that receives various inputs from the outside. For example, the input unit 14 is an operation device for the user to perform various operations, such as a keyboard, a mouse, and an operation key. Note that, when a touch panel is adopted as the terminal device 10, the touch panel is included in the input unit 14. In this case, the user performs various operations by touching the screen with his/her finger or a stylus.

Note that the terminal device 10 may include a touch sensor for operation separately from the touch panel.

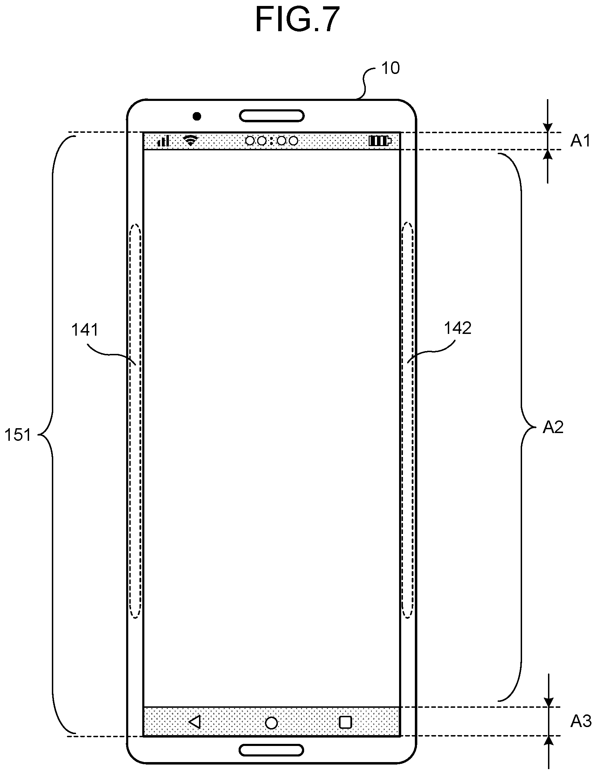

FIG. 7 illustrates one example of an external appearance of the terminal device 10. For example, the terminal device 10 may be provided with sensor regions 141 and 142 capable of detecting contact of a finger of the user along a longitudinal direction on the outer side of a display screen. The user can perform various operations of the terminal device 10 by sliding, for example, his/her thumb in the regions.

Returning to FIG. 6, the output unit 15 is a device that gives various outputs of, for example, sound, light, vibration, and an image to the outside. The output unit 15 gives various outputs to the user under the control of the control unit 13. Note that the output unit 15 includes a display device that displays various pieces of information. The display device is, for example, a liquid crystal display or an organic electro luminescence (EL) display. In the following description, a display device of the terminal device 10 or a screen formed by the display device may be referred to as a display screen 151. Note that the display screen 151 may be a touch panel display device. In this case, the display screen 151 may be regarded as being integrated with the input unit 14.

The display screen 151 may be, for example, a vertically long screen as illustrated in FIG. 7. An upper region A1 of the display screen 151 is used for displaying general information (e.g., time, radio wave state, and battery state). Furthermore, a lower region A3 of the display screen 151 is used for displaying various keys (e.g., back key, home key, and menu/multitask key). A central region A2 sandwiched between these regions is a display region of an application screen. Note that the display region of the application screen is not limited to the central region A2. For example, the terminal device 10 may set a region obtained by combining the upper region A1 and/or the lower region A3 with the central region A2 as the display region of the application screen.

Note that, when the terminal device 10 is an xR device (e.g., AR/MR glasses), the output unit 15 may be a transmission device that projects an image onto the glasses, or may be a retina projection device that directly projects an image onto the retina of the user. Note that the terminal device 10 may have no screen (e.g., screen projected onto display, panel, or like) as an object since the terminal device 10 have a means of directly projecting an image onto the retina of the user, for example. Even in this case, if the user can recognize a screen as a screen, the screen can be regarded as the display screen 151 of the embodiment.

Note that, when the terminal device 10 is an xR device, the terminal device 10 may detect an operation of the user touching the screen based on information from a sensor that detects a motion of a hand of the user. In this case, the operation of the user touching the screen may be regarded as a touch operation, and the following embodiment may be applied. In the following description, the display screen 151 of the terminal device 10 is a touch panel display in one example.

### <<3. Example of Basic Display Control of Window>>

The configuration of the terminal device 10 has been described above. An example of basic display control of a window will be described before the operation of the terminal device 10 is described.

### <3-1. Display Example of Window>

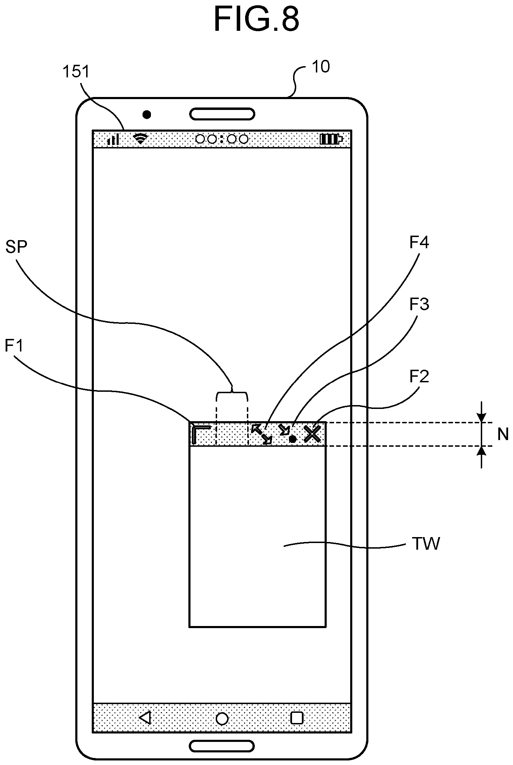

The terminal device 10 displays the window TW whose position and size can be changed on the display screen 151 in response to a user operation. FIG. 8 illustrates the window TW displayed on the screen. In the example of FIG. 8, the window TW is displayed in the central region A2, which is a display region of the application screen.

Here, the application screen may be a background screen on which an icon and the like are displayed, or may be a main window displayed in the central region A2 on the full screen. Note that the window TW may be superimposed and displayed on another window (e.g., main window). In the example of FIG. 8, illustration of the application screen is omitted in order to facilitate visual recognition of the window TW. The user freely changes the position and size of the window TW to balance display with the application screen.

At least when the focus is placed on the window TW, the terminal device 10 arranges a bar region (UI bar) in one of end regions (upper end region, lower end region, left end region, and right end region) of the window TW. In the example of FIG. 8, the terminal device 10 displays a UI bar N in the upper end region of the window TW. The terminal device 10 arranges one or a plurality of function icons related to a window operation on the UI bar N. Note that the function icons may be referred to in other names, such as function button.

In the example of FIG. 8, a function icon F1, a function icon F2, a function icon F3, and a function icon F4 are arranged on the UI bar N.

The function icon F1 is an icon (resize button) for adjusting the size of the window TW. A handle (e.g., handle H3 in FIG. 4) for size adjustment is arranged in an arrangement place of the function icon F1. When the user touches the function icon F1, the terminal device 10 performs processing for adjusting the size of the window TW in response to the touch operation of the user.

The function icon F2 is an icon (close button) for closing the window TW. When the user touches the function icon F2, the terminal device 10 closes the window TW.

The function icon F3 is an icon for performing icon display of the window TW. When the user touches the function icon F3, the terminal device 10 iconifies the window TW, and displays the window TW on the screen. In the case, the terminal device 10 may display an icon image associated with an application displayed on the window TW. When the user touches the icon, the terminal device 10 displays the window TW on the screen again.

The function icon F4 is an icon for displaying the window TW on the full screen. When the user touches the function icon F4, the terminal device 10 displays the window TW on the full screen.

Note that a function icon non-display region SP is provided in the UI bar N of the window TW. The terminal device 10 moves the position of the window TW based on a moving operation of the window TW of the user using the non-display region SP. For example, when the user keeps touching the non-display region SP and slides (swipes) his/her finger, the terminal device 10 moves the window TW in accordance with the moving operation of the user. Note that the non-display region may be referred to in other names, such as a blank region.

<3-2. Change in Display Mode Depending on Position of Window>

Next, a change in a display mode of the window TW depending on the position of the window TW on the display screen 151 will be described.

### <3-2-1. Movement of Window TW>

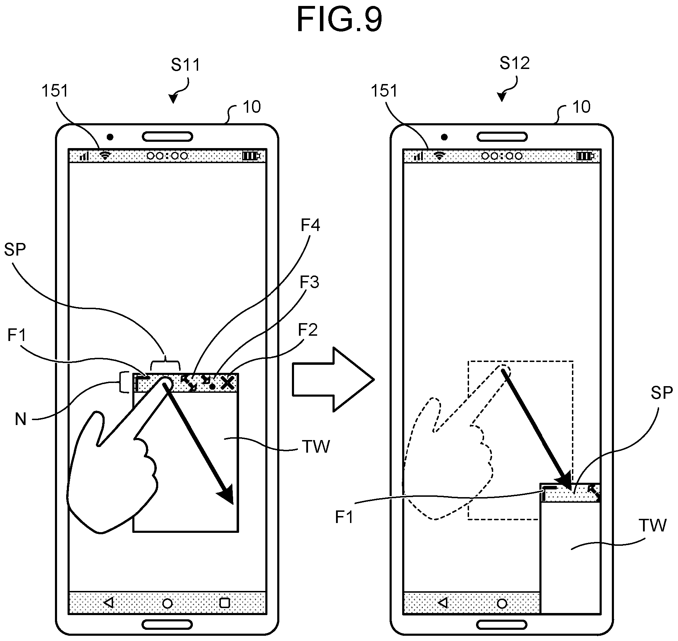

As described above, the position and size of the window TW can be changed. FIG. 9 illustrates how the window TW moves. In State S11 of FIG. 9, the window TW is displayed on the display screen 151. Note that, in the example of FIG. 9, illustration of an application screen (e.g., main window displayed on full screen) behind the window TW is omitted in order to facilitate visual recognition of the movement of the window TW.

The terminal device 10 moves the window TW based on the moving operation of the user using the non-display region SP. In the moving operation, for example, the user keeps touching the non-display region SP, and slides (swipes) his/her finger. The terminal device 10 moves the window TW in accordance with the moving operation of the user (State S12).

In the case, the user can cause a part of the window TW to protrude from the display screen 151. That is, the terminal device 10 of the embodiment can move the window TW beyond at least one of the upper end, the lower end, the left end, and the right end of the display screen 151. In the case, the terminal device 10 desirably moves the window TW so as to leave at least a part of the non-display region SP on the display screen 151.

When the part of the window TW protrudes from the display screen 151, a part of the UI bar N protrudes from the display screen 151 to disappear. As described above, the non-display region SP and the plurality of function icons are displayed in the UI bar N. In the case, if the non-display region SP and a function icon F5 (resize button) protrude from the display screen 151, the user cannot change the position and size of the window TW thereafter. Therefore, at least one of the non-display region SP and the function icon F5 needs to be left on the display screen 151. As a result, the movement of the window TW is limited.

Therefore, the terminal device 10 of the embodiment changes the display mode of the window TW in accordance with a situation so as to increase a movable region on the display screen 151 of the window TW. For example, the terminal device 10 changes a display position of the UI bar N and arrangement of the function icons based on the position of the window TW on the display screen 151. The operation of the terminal device 10 will be described below with reference to the drawings.

### <3-2-2. Change in Display Mode in Case Where Horizontal Movement is Performed in Vertical State>

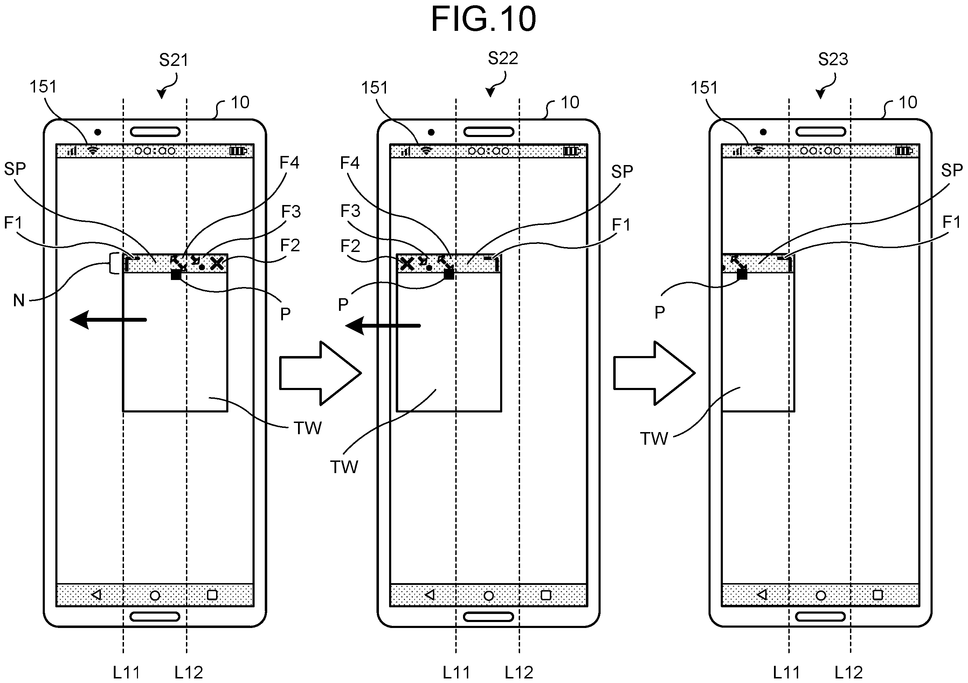

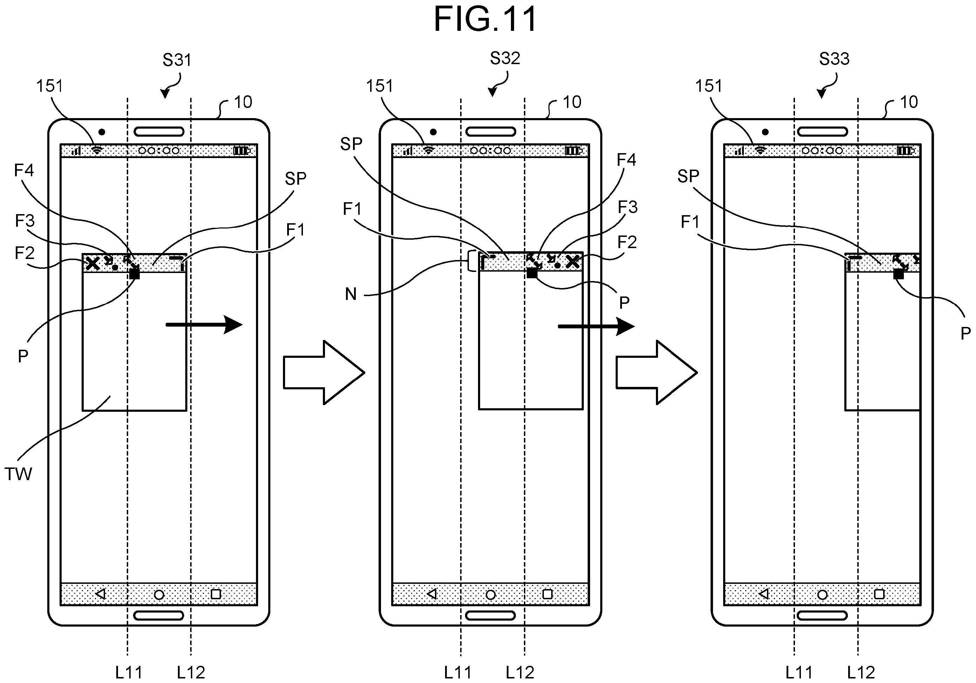

First, a change in the display mode of the window TW in a case where the window TW horizontally moves with the display screen 151 being in a vertical state will be described. FIGS. 10 and 11 illustrate how the window TW horizontally moves in a case where the display screen 151 is in the vertical state. FIG. 10 illustrates how the window TW moves leftward. FIG. 11 illustrates how the window TW moves rightward. Here, the vertical state means a state in which the longitudinal direction of the display screen 151 corresponds to an upper and lower direction as illustrated in FIGS. 10 and 11.

In the vertical state, the UI bar N is located in the upper end region or the lower end region of the window TW. When the window TW horizontally moves, the terminal device 10 changes a display order of the plurality of function icons in the UI bar N based on information on the position of the window TW in the display screen 151.

### (1) Leftward Movement

First, a leftward movement of the window TW will be described with reference to FIG. 10. Although, in the example of FIG. 10, the UI bar N is arranged in the upper end region of the window TW, the UI bar N may be arranged in the lower end region.

Note that, in the following description, a pivot P defines the position of the window TW on the display screen 151. The pivot P is located somewhere in the display region of the window TW. The pivot P is at a fixed position on the window TW, and moves in accordance with the movement of the window TW. In the embodiment, in one example, the pivot P is located at an upper center of the window TW. More specifically, as illustrated in FIG. 10, the pivot P is located at the center in a horizontal direction of the window TW at an upper side of a region excluding the UI bar N in a region of the window TW. Note that, although, in the embodiment, the figure illustrates the position of the pivot P, this is merely for facilitating understanding of the embodiment, and the pivot P is not actually displayed on the display screen 151.

Furthermore, FIG. 10 illustrates a line L11 and a line L12 along the longitudinal direction of the display screen 151. The line L11 is located at a position shifted leftward from the center in the horizontal direction by a predetermined distance. The line L12 is located at a position shifted rightward from the center in the horizontal direction by a predetermined position. These lines trigger a change in the display order of the plurality of function icons. When the pivot P reaches a range from the right end of the display screen 151 to the line L11 or a range from the left end of the display screen 151 to the line L12, the terminal device 10 changes the display order of the plurality of function icons. A range between the line L11 and the line L12 is hysteresis for preventing the display order of the plurality of function icons from being frequently changed. These lines are also intended to merely facilitate understanding of the embodiment, and are not actually displayed on the display screen 151.

In State S21 of FIG. 10, the window TW is displayed. Note that, in the example of FIG. 10, illustration of an application screen (e.g., main window displayed on full screen) behind the window TW is omitted in order to facilitate visual recognition of the movement of the window TW. In an example of State S21, the UI bar N is located in the upper end region of the window TW. Then, the function icon F2, the function icon F3, the function icon F4, and the function icon F1 are arranged from the right in the display order of the function icons in the UI bar N.

The terminal device 10 moves the window TW leftward in accordance with a user operation. Then, when the pivot P of the window TW reaches the line L11, the display order of the plurality of function icons in the UI bar N is changed (State S22). In an example of State S22, the terminal device 10 changes the function icon F1 used for resizing the window TW to a position farthest from the left end of the display screen 151. More specifically, the terminal device 10 changes the display order of the function icons in the UI bar N to an order of the function icon F1, the function icon F4, the function icon F3, and the function icon F2 from the right. With the change of the display order of the plurality of function icons, the function icon non-display region SP is located far from the left end of the display screen 151.

The terminal device 10 further moves the window TW leftward in accordance with a user operation (State S23). Since the function icon F1 and the non-display region SP have moved to positions far from the left end of the display screen 151, the terminal device 10 can increase a lower movement range of the window TW. For example, the terminal device 10 can cause the window TW to greatly protrude outward from the left end of the display screen 151.

### (2) Rightward Movement

Next, a leftward movement of the window TW will be described with reference to FIG. 11. Although, also in the example of FIG. 11, the UI bar N is arranged in the upper end region of the window TW, the UI bar N may be arranged in the lower end region. Furthermore, as in the example of FIG. 10, the pivot P defines the position of the window TW on the display screen 151. Furthermore, as in the example of FIG. 10, the line L11 and the line L12 trigger a change in the display order of the plurality of function icons.

In State S31 of FIG. 11, the window TW is displayed. Note that, in the example of FIG. 11, illustration of an application screen (e.g., main window displayed on full screen) behind the window TW is omitted in order to facilitate visual recognition of the movement of the window TW. In an example of State S32, the UI bar N is located in the upper end region of the window TW. Then, the function icon F2, the function icon F3, the function icon F4, and the function icon F1 are arranged from the left in the display order of the function icons in the UI bar N.

The terminal device 10 moves the window TW rightward in accordance with a user operation. Then, when the pivot P of the window TW reaches the line L12, the display order of the plurality of function icons in the UI bar N is changed (State S32). In the example of State S32, the terminal device 10 changes the function icon F1 to a position farthest from the right end of the display screen 151. More specifically, the terminal device 10 changes the display order of the function icons in the UI bar N to an order of the function icon F1, the function icon F4, the function icon F3, and the function icon F2 from the left. With the change of the display order of the plurality of function icons, the function icon non-display region SP is located far from the right end of the display screen 151.

The terminal device 10 further moves the window TW rightward in accordance with a user operation (State S33). Since the function icon F1 and the non-display region SP have moved to positions far from the right end of the display screen 151, the terminal device 10 can increase a right movement range of the window TW. For example, the terminal device 10 can cause the window TW to greatly protrude outward from the right end of the display screen 151.

### <3-2-3. Change in Display Mode in Case Where Vertical Movement is Performed in Vertical State>

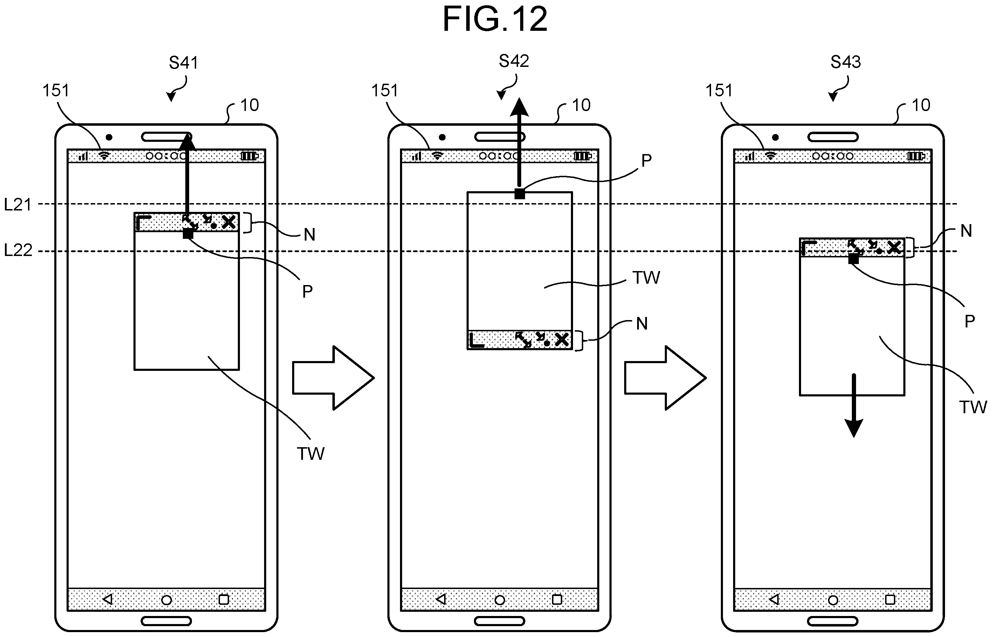

Next, a change in the display mode of the window TW in a case where the window TW vertically moves with the display screen 151 being in a vertical state will be described. FIG. 12 illustrates how the window TW vertically moves in a case where the display screen 151 is in the vertical state.

In the vertical state, the UI bar N is located in the upper end region or the lower end region of the window TW. In a case of a vertical movement, the terminal device 10 changes the position of the UI bar N to another end region based on information on the position of the window TW in the display screen 151.

As in the example of FIG. 10, the pivot P defines the position of the window TW on the display screen 151. Furthermore, FIG. 12 illustrate a line L21 and a line L22 at positions spaced apart from each other on an upper side along a lateral direction of the display screen 151. These lines trigger a change in the display position of the UI bar **N.** When the pivot P reaches a range from the upper end of the display screen 151 to the line L21 or a range from the lower end of the display screen 151 to the line L22, the terminal device 10 changes the display order of the plurality of function icons. A range between the line L21 and the line L22 is hysteresis for preventing the position of the UI bar N from being frequently changed.

In State S41 of FIG. 12, the window TW is displayed. Note that, in the example of FIG. 12, illustration of an application screen (e.g., main window displayed on full screen) behind the window TW is omitted in order to facilitate visual recognition of the movement of the window TW. In an example of State S41, the UI bar N is located in the upper end region of the window TW.

The terminal device 10 moves the window TW upward in accordance with a user operation. Then, when the pivot P of the window TW reaches the line L21, the position of the UI bar N is changed (State S42). In an example of State S42, the terminal device 10 changes the UI bar N from the upper end region to the lower end region of the window TW so that the UI bar N is located far from the upper end of the display screen 151. Since the UI bar N has moved to a position far from the upper end of the display screen 151, the terminal device 10 can increase an upper movement range of the window TW. For example, the terminal device 10 can cause the window TW to greatly protrude outward from the upper end of the display screen 151.

Next, the terminal device 10 moves the window TW downward in accordance with a user operation. Then, when the pivot P of the window TW reaches the line L22, the position of the UI bar N is changed (State S43). In an example of State S43, the terminal device 10 changes the UI bar N from the lower end region to the upper end region of the window TW so that the UI bar N is located far from the lower end of the display screen 151. Since the UI bar N has moved to a position far from the lower end of the display screen 151, the terminal device 10 can increase the lower movement range of the window TW. For example, the terminal device 10 can cause the window TW to greatly protrude outward from the lower end of the display screen 151.

### <3-2-4. Change in Display Mode in Horizontal State>

Although, in the above-described embodiment, the display screen 151 is in the vertical state, the display screen 151 may also be in a horizontal state. Here, the horizontal state means a state in which the longitudinal direction of the display screen 151 corresponds to the horizontal direction. A change in the display mode of the window TW in a case where the window TW moves with the display screen 151 being in the horizontal state will be described below.

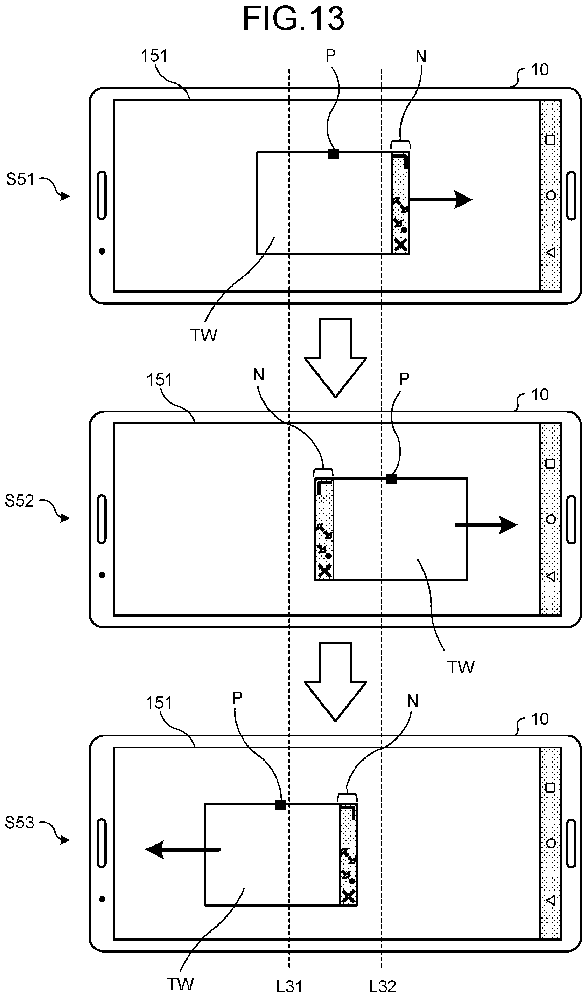

First, a change in the display mode of the window TW in a case where the window TW horizontally moves will be described. FIG. 13 illustrates how the window TW horizontally moves in a case where the display screen 151 is in the horizontal state.

In the horizontal state, the UI bar N is located in the left end region or the right end region of the window TW. In a case of a horizontal movement, the terminal device 10 changes the position of the UI bar N to another end region based on information on the position of the window TW in the display screen 151.

As in the example of FIG. 10, the pivot P defines the position of the window TW on the display screen 151.

In the example of FIG. 13, the pivot P is located at the upper center. Furthermore, FIG. 13 illustrates a line L31 and a line L32 along the longitudinal direction of the display screen 151. The line L31 is located at a position shifted leftward from the center in the horizontal direction by a predetermined distance. The line L32 is located at a position shifted rightward from the center in the horizontal direction by a predetermined position. These lines trigger a change in the display position of the UI bar N. When the pivot P reaches a range from the left end of the display screen 151 to the line L31 or a range from the right end of the display screen 151 to the line L32, the terminal device 10 changes the display order of the plurality of function icons. A range between the line L31 and the line L32 is hysteresis for preventing the position of the UI bar N from being frequently changed.

In State S51 of FIG. 13, the window TW is displayed. Note that, in the example of FIG. 13, illustration of an application screen (e.g., main window displayed on full screen) behind the window TW is omitted in order to facilitate visual recognition of the movement of the window TW. In an example of State S51, the UI bar N is located in the right end region of the window TW.

The terminal device 10 moves the window TW rightward in accordance with a user operation. Then, when the pivot P of the window TW reaches the line L32, the position of the UI bar N is changed (State S52). In an example of State S52, the terminal device 10 changes the UI bar N from the right end region to the left end region of the window TW so that the UI bar N is located far from the right end of the display screen 151. Since the UI bar N has moved to a position far from the right end of the display screen 151, the terminal device 10 can increase the right movement range of the window TW. For example, the terminal device 10 can cause the window TW to greatly protrude outward from the right end of the display screen 151.

Next, the terminal device 10 moves the window TW leftward in accordance with a user operation. Then, when the pivot P of the window TW reaches the line L31, the position of the UI bar N is changed (State S53). In an example of State S53, the terminal device 10 changes the UI bar N from the left end region to the right end region of the window TW so that the UI bar N is located far from the left end of the display screen 151. Since the UI bar N has moved to a position far from the left end of the display screen 151, the terminal device 10 can increase a left movement range of the window TW. For example, the terminal device 10 can cause the window TW to greatly protrude outward from the left end of the display screen 151.

Even when the window TW moves vertically, the display mode of the window TW may be changed. Specifically, the terminal device 10 operates similarly in the case where the display screen 151 is in the vertical state and the window TW moves horizontally. Specifically, the terminal device 10 changes the display order of the plurality of function icons in the UI bar N based on the position (pivot P) of the window TW in the display screen 151. For example, the terminal device 10 displays the plurality of function icons in either the left end region or the right end region of the window TW. Then, when the window TW reaches a predetermined range from the upper end or the lower end of the display screen 151 with the vertical movement of the window TW, the terminal device 10 changes the display order of the plurality of function icons in the UI bar N. Specifically, as in the examples of FIGS. 10 and 11, the terminal device 10 moves the positions of the function icon F1 and the non-display region SP to positions far from the upper end or the lower end of the display screen 151. This enables the terminal device 10 to increase an upper or lower movement range of the window TW.

### <<4. Operation of Terminal Device>>

The example of basic display control of the window TW has been described above. Next, the operation of the terminal device 10 of the embodiment will be described in detail.

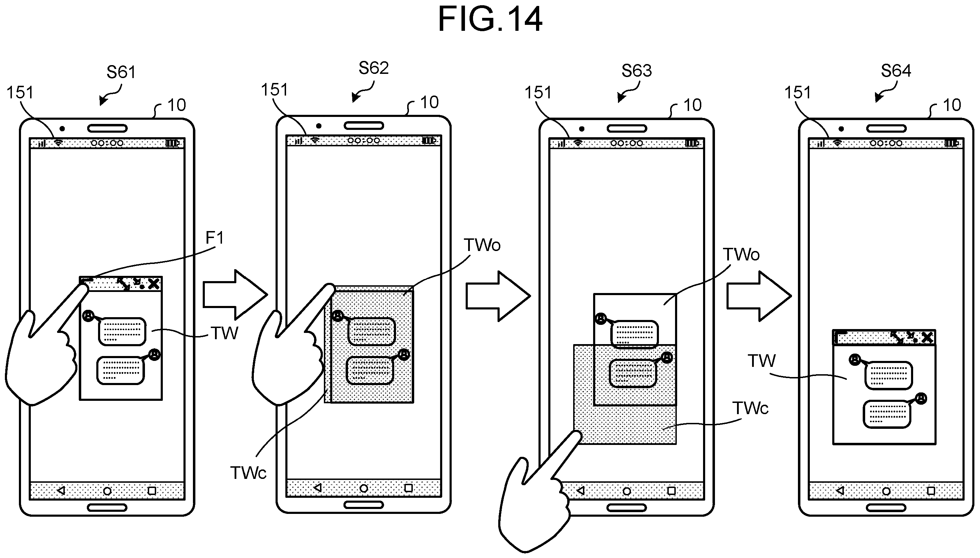

<4-1. Outline of Size Adjustment Operation> First, a size adjustment operation of the window TW will be outlined. FIG. 14 outlines the size adjustment operation of the window TW.

The terminal device 10 displays the resizable window TW on the display screen 151 in response to a user operation. When the user touches a function icon F1 of the window TW (State S61), the terminal device 10 superimposes and displays a translucent window for size adjustment (hereinafter, referred to as window TWc for size adjustment) on the window TW (State S62). In an example of State S62, the function icon F1 is displayed at the upper left corner of the window TW, so that the terminal device 10 displays the window TWc for size adjustment with the upper left corner as a catch target.

The terminal device 10 changes the shape of the window TWc for size adjustment without changing the shape of the window TW in response to a touch operation (e.g., finger slide operation) of the user (State S63). When the user changes the size of the window TWc for size adjustment to a desired size and releases his/her finger from the display screen 151, the terminal device 10 changes the size of the window TW to a size of the window TWc for size adjustment (State S64).

In the example of FIG. 14, the function icon F1 is arranged at the upper left of the window TW, so that an initial catch corner is an upper left corner of an original window TWo. Therefore, an initial fixed corner is a lower right corner, which is a diagonal corner of the initial catch corner. As described in <3-2> above, however, the position of the function icon F1 to the window changes in accordance with the position of the window TWo of the original size on the display screen 151, so that the positions of the initial catch corner and the initial fixed corner change in accordance with the position of the window TWo of the original size on the display screen 151. For example, the function icon F1 is located at the lower left of the window TW as illustrated in State S42 of FIG. 12, the initial catch corner is a lower left corner of the original window TWo, and the initial fixed corner is an upper right corner.

Although, in the following description, the initial catch corner is an upper left corner and the initial fixed corner is a lower right corner in one example, the initial catch corner and the initial fixed corner can be appropriately changed.

Although the size adjustment operation has been outlined above, the size adjustment operation will be described in detail. A plurality of patterns of size adjustment operations is conceived in accordance with the relation between a catch target (catch corner) and a fixed corner (anchor). In the embodiment, three patterns of Patterns 1 to 3 will be described.

### <4-2. Size Adjustment Operation (Pattern 1)>

First, a size adjustment operation of Pattern 1 will be described. In Pattern 1, one of four corners of the minimum size window is set as a fixed corner (anchor).

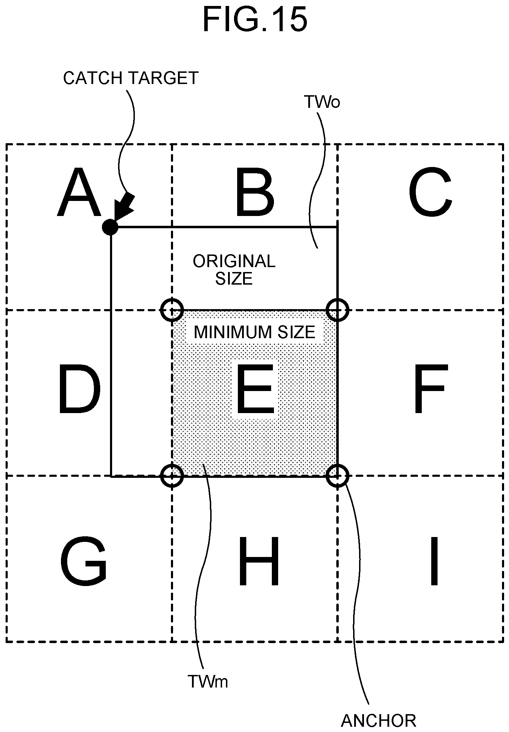

FIG. 15 illustrates the size adjustment operation of Pattern 1. FIG. 15 illustrates the relation between the window TW and the adjustment areas for adjusting the size of the window. The window TWo is a window of an original size. Setting of a minimum size window TWm is provided in the window TW. In Pattern 1, the minimum size window TWm is located in a fixed area within an area of the window TWo. Specifically, the minimum size window is located in an area obtained by reducing the window TWo to the minimum size with an initial fixed corner (lower right corner in example of FIG. 15) as an anchor.

The terminal device 10 sets a plurality of adjustment areas for adjusting the size of the window TW for one window above. In the embodiment, the terminal device 10 sets adjustment areas at positions of at least four corners of the window TW. In the example of FIG. 15, adjustment areas A, C, G, and I are provided at the four corners of the window TW.

The adjustment area A corresponds to an adjustment area associated with the upper left corner of the window TW, and is located in the upper left direction of an area where the minimum size window TWm is located. The adjustment area C corresponds to an adjustment area associated with the upper right corner of the window TW, and is located in the upper right direction of the area where the minimum size window TWm is located. The adjustment area G corresponds to an adjustment area associated with the lower left corner of the window TW, and is located in the lower left direction of the area where the minimum size window TWm is located. The adjustment area I corresponds to an adjustment area associated with the lower right corner of the window TW, and is located in the lower right direction of the minimum size window TWm.

Furthermore, in the embodiment, in addition to these four adjustment areas, the terminal device 10 sets adjustment areas at positions of four sides of the window TW. In the example of FIG. 15, adjustment areas B, D, F, and H are provided at the four sides of the window TW.

The adjustment area B corresponds to an adjustment area associated with the upper side of the window TW, and is located in the upper direction of the area where the minimum size window TWm is located. The adjustment area D corresponds to an adjustment area associate with the left side of the window TW, and is located in the left direction of the area where the minimum size window TWm is located. The adjustment area F corresponds to an adjustment area associated with the right side of the window TW, and is located in the right direction of the area where the minimum size window TWm is located. The adjustment area H corresponds to an adjustment area associated with the lower side of the window TW, and is located in the lower direction of the area where the minimum size window TWm is located.

Moreover, in the embodiment, the terminal device 10 sets an adjustment area E in an area where the minimum size window TWm is located in addition to these eight adjustment areas.

When the user touches the function icon F1, the terminal device 10 sets one of the four corners of the window TW as a catch target (catch corner), and sets one of the four corners of the window TW as a fixed corner (anchor) for size adjustment. In the embodiment, the terminal device 10 sets the diagonal corner of the catch corner as the fixed corner (anchor). For example, as illustrated in FIG. 15, when the upper left corner of the window TW is set as a catch target (catch corner), the terminal device 10 sets the lower right corner, which is a diagonal corner thereof, as the fixed corner.

Then, the terminal device 10 performs processing for adjusting the size of the window TW in response to a touch operation of the user in the adjustment area at the diagonal corner (i.e., catch corner) of the fixed corner. For example, as illustrated in FIG. 15, when the upper left corner of the window TW is set as a catch target (catch corner), the terminal device 10 changes the shape of the window TWc for size adjustment with the lower right corner as an anchor in response to a finger slide operation of the user in the adjustment area A. Specifically, the terminal device 10 changes the shape of the window TWc for size adjustment with the upper left direction when viewed from the minimum size window TWm as a scaling direction while maintaining the lower right corner, which is fixed corner, at the position.

Furthermore, when the user slides the touch position to another adjustment area, the terminal device 10 changes the catch target (catch corner) to a corner associated with the other adjustment area, and changes the setting of the fixed corner. In Pattern 1, the terminal device 10 changes the setting of the fixed corner to one of the four corners of the minimum size window TWm, that is, the diagonal corner of a corner associated with an adjustment area of a slide destination. For example, it is assumed that the user slides the touch position from the adjustment area A to the adjustment area G in FIG. 15. In this case, the terminal device 10 changes the catch target (catch corner) to the lower left corner, and changes the fixed corner to the upper right corner of the minimum size window TWm.

Table 1 illustrates the relation among the anchor (fixed corner), the catch target (catch corner), and the scaling direction in Pattern 1.

**(Table 1) Pattern 1**

| | Anchor | Catch target | Scaling direction |
|---|---|---|---|
| A | Lower right corner | Upper left corner | Upper left direction |
| B | Lower side (Capable of being displayed at lower right corner) | Upper side | Upper direction |
| C | Lower left corner | Upper right corner | Upper left direction |
| D | Right side (Capable of being displayed at lower right corner) | Left side | Left direction |
| E | Not provided (Capable of being displayed at lower right corner) | Not provided | Fixed (Not scalable) |
| F | Left side (Capable of being displayed at lower left corner) | Right side | Left direction |
| G | Upper right corner | Lower left corner | Lower left direction |
| H | Upper side (Capable of being displayed at upper right corner) | Lower side | Lower direction |
| | Upper left corner | Lower right corner | Lower right direction |

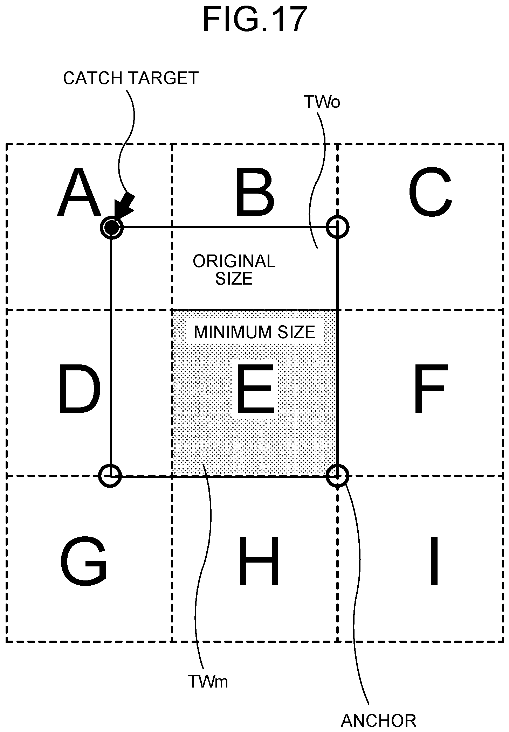

In the table, A to I in a left end column correspond to the adjustment areas A to I in FIG. 17. The size adjustment operation of the terminal device 10 for each adjustment area will be specifically described below.

### (1) Adjustment Area A

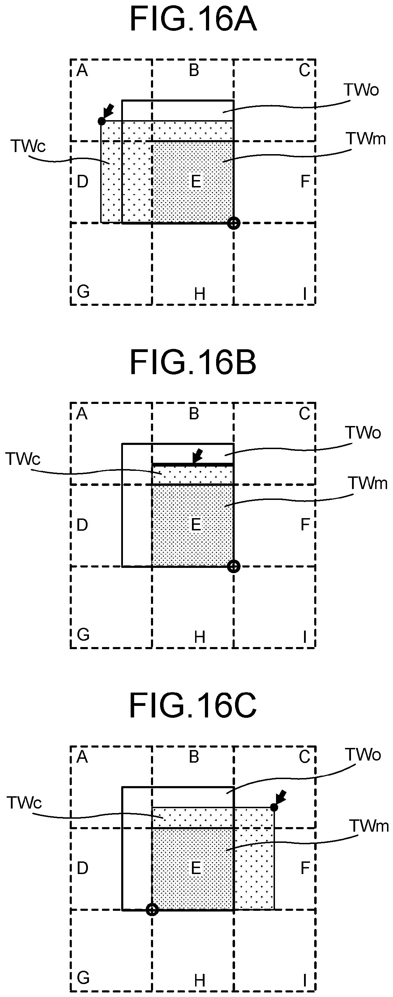

FIG. 16A illustrates a size adjustment operation in the adjustment area A. When the upper left corner of the window TW is set as a catch target (catch corner) by a touch operation of the user, the terminal device 10 sets the lower right corner, which is a diagonal corner thereof, as a fixed corner. The terminal device 10 changes the shape of the window TWc for size adjustment with the lower right corner as an anchor and the upper left direction when viewed from the minimum size window TWm as the scaling direction in response to the finger slide operation of the user in the adjustment area A.

### (2) Adjustment Area B

FIG. 16B illustrates a size adjustment operation in the adjustment area B. When a finger of the user is slid from another adjustment area to the adjustment area B, the terminal device 10 sets the upper side as a catch target, and sets the opposite lower side as an anchor. Note that the terminal device 10 may set the lower right corner as a fixed corner (anchor). The terminal device 10 changes the shape of the window TWc for size adjustment with the lower side (lower right corner) as an anchor and the upper direction when viewed from the minimum size window TWm as the scaling direction in response to the finger slide operation of the user in the adjustment area B.

### (3) Adjustment Area C

FIG. 16C illustrates a size adjustment operation in the adjustment area C. When a finger of the user is slid from another adjustment area to the adjustment area C, the terminal device 10 sets the upper right corner as a catch target, and sets the lower left corner, which is a diagonal corner thereof, as a fixed corner. The terminal device 10 changes the shape of the window TWc for size adjustment with the lower left corner as an anchor and the upper right direction when viewed from the minimum size window TWm as the scaling direction in response to the finger slide operation of the user in the adjustment area C.

### (4) Adjustment Area D

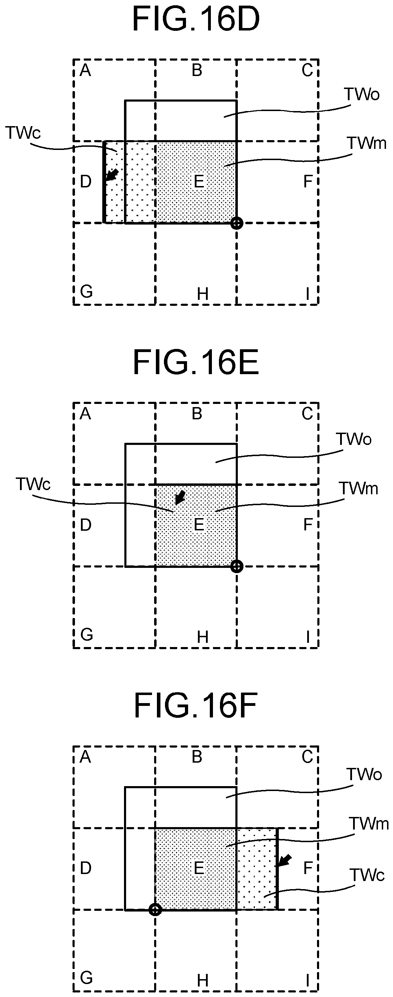

FIG. 16D illustrates a size adjustment operation in the adjustment area D. When a finger of the user is slid from another adjustment area to the adjustment area D, the terminal device 10 sets the left side as a catch target, and sets the opposite right side as an anchor. Note that the terminal device 10 may set the lower right corner as a fixed corner (anchor). The terminal device 10 changes the shape of the window TWc for size adjustment with the right side (lower right corner) as an anchor and the left direction when viewed from the minimum size window TWm as the scaling direction in response to the finger slide operation of the user in the adjustment area D.

### (5) Adjustment Area E

FIG. 16E illustrates a size adjustment operation in the adjustment area E. When a finger of the user is slid from another adjustment area to the adjustment area E, the terminal device 10 fixes the window TWc for size adjustment to a window having the same size as the minimum size window TWm.

### (6) Adjustment Area F

FIG. 16F illustrates a size adjustment operation in the adjustment area F. When a finger of the user is slid from another adjustment area to the adjustment area F, the terminal device 10 sets the right side as a catch target, and sets the opposite left side as an anchor. Note that the terminal device 10 may set the lower left corner as a fixed corner (anchor). The terminal device 10 changes the shape of the window TWc for size adjustment with the left side (lower left corner) as an anchor and the right direction when viewed from the minimum size window TWm as the scaling direction in response to the finger slide operation of the user in the adjustment area F.

### (7) Adjustment Area G

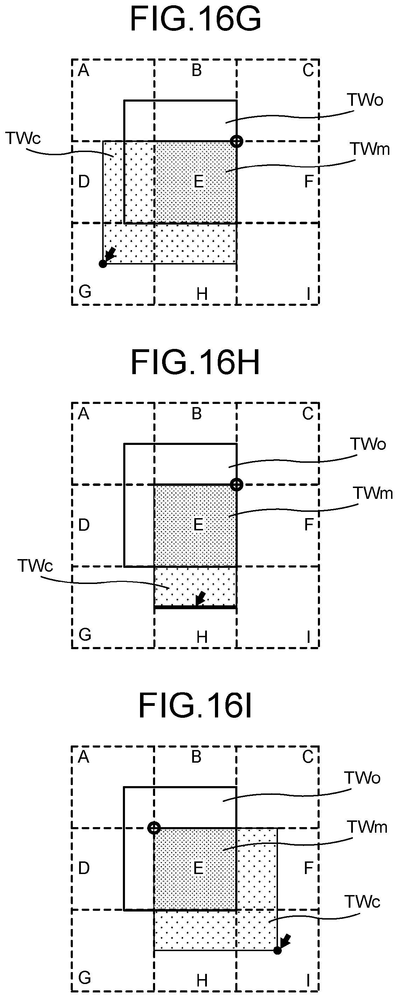

FIG. 16G illustrates a size adjustment operation in the adjustment area G. When a finger of the user is slid from another adjustment area to the adjustment area G, the terminal device 10 sets the lower left corner as a catch target, and sets the upper right corner, which is a diagonal corner thereof, as a fixed corner. The terminal device 10 changes the shape of the window TWc for size adjustment with the upper right corner as an anchor and the lower left direction when viewed from the minimum size window TWm as the scaling direction in response to the finger slide operation of the user in the adjustment area G.

### (8) Adjustment Area H

FIG. 16H illustrates a size adjustment operation in the adjustment area H. When a finger of the user is slid from another adjustment area to the adjustment area H, the terminal device 10 sets the lower side as a catch target, and sets the opposite upper side as an anchor. Note that the terminal device 10 may set the upper right corner as a fixed corner (anchor). The terminal device 10 changes the shape of the window TWc for size adjustment with the upper side (upper right corner) as an anchor and the lower direction when viewed from the minimum size window TWm as the scaling direction in response to the finger slide operation of the user in the adjustment area H.

### (9) Adjustment Area I

FIG. 16I illustrates a size adjustment operation in the adjustment area I. When a finger of the user is slid from another adjustment area to the adjustment area I, the terminal device 10 sets the lower right corner as a catch target, and sets the upper left corner, which is a diagonal corner thereof, as a fixed corner. The terminal device 10 changes the shape of the window TWc for size adjustment with the upper left corner as an anchor and the lower right direction when viewed from the minimum size window TWm as the scaling direction in response to the finger slide operation of the user in the adjustment area I.

According to pattern 1, even when a finger of the user slides across an adjustment area, the shape of the window TWc for size adjustment smoothly changes. For example, when a finger of the user is slid from the adjustment area D to the adjustment area G, the size of the window TWc for size adjustment does not suddenly change. Furthermore, according to Pattern 1, even when the user erroneously slides his/her finger to another adjustment area, the display state of the window TWc for size adjustment can be immediately returned to the original state. For example, when the user erroneously slides his/her finger from the adjustment area D to the adjustment area G, the display state of the window TWc for size adjustment can be immediately returned to the original state if the user returns the finger to the adjustment area D. Therefore, when Pattern 1 is adopted, a size adjustment operation with a low feeling of strangeness can be performed.

### <4-3. Size Adjustment Operation (Pattern 2)>

In a case of Pattern 1, one of the four corners of the minimum size window is set as a fixed corner. An operation such as enlarging the window TW in the lower left direction with the upper right corner of the window TWo of the original size as a fixed corner cannot be performed by one action. Therefore, in Pattern 2, one of the four corners of the window TWo of the original size is set as a fixed corner (anchor). A size adjustment operation of Pattern 2 will be described below.

FIG. 17 illustrates the size adjustment operation of Pattern 2. FIG. 17 illustrates the relation between the window TW and the adjustment areas for adjusting the size of the window. The window TWo is a window of an original size. Setting of a minimum size window TWm is provided in the window TW. In Pattern 2, the minimum size window TWm is located in a fixed area within an area of the window TWo. Specifically, the minimum size window is located in an area obtained by reducing the window TWo to the minimum size with an initial fixed corner (lower right corner in example of FIG. 17) as an anchor.

The terminal device 10 sets a plurality of adjustment areas for adjusting the size of the window TW for one window above. In the embodiment, the terminal device 10 sets adjustment areas at positions of at least four corners of the window TW. In the example of FIG. 17, adjustment areas A, C, G, and I are provided at the four corners of the window TW.

The adjustment area A corresponds to an adjustment area associated with the upper left corner of the window TW, and is located in the upper left direction of an area where the minimum size window TWm is located. The adjustment area C corresponds to an adjustment area associated with the upper right corner of the window TW, and is located in the upper right direction of the area where the minimum size window TWm is located. The adjustment area G corresponds to an adjustment area associated with the lower left corner of the window TW, and is located in the lower left direction of the area where the minimum size window TWm is located. The adjustment area I corresponds to an adjustment area associated with the lower right corner of the window TW, and is located in the lower right direction of the minimum size window TWm.

Furthermore, in the embodiment, in addition to these four adjustment areas, the terminal device 10 sets adjustment areas at positions of four sides of the window TW. In the example of FIG. 17, adjustment areas B, D, F, and H are provided at the four sides of the window TW.

The adjustment area B corresponds to an adjustment area associated with the upper side of the window TW, and is located in the upper direction of the area where the minimum size window TWm is located. The adjustment area D corresponds to an adjustment area associate with the left side of the window TW, and is located in the left direction of the area where the minimum size window TWm is located. The adjustment area F corresponds to an adjustment area associated with the right side of the window TW, and is located in the right direction of the area where the minimum size window TWm is located. The adjustment area H corresponds to an adjustment area associated with the lower side of the window TW, and is located in the lower direction of the area where the minimum size window TWm is located.

Moreover, in the embodiment, the terminal device 10 sets an adjustment area E in an area where the minimum size window TWm is located in addition to these eight adjustment areas.

When the user touches the function icon F1, the terminal device 10 sets one of the four corners of the window TW as a catch target (catch corner), and sets one of the four corners of the window TW as a fixed corner (anchor) for size adjustment. In the embodiment, the terminal device 10 sets the diagonal corner of the catch corner as the fixed corner (anchor). For example, as illustrated in FIG. 17, when the upper left corner of the window TW is set as a catch target (catch corner), the terminal device 10 sets the lower right corner, which is a diagonal corner thereof, as the fixed corner.

Then, the terminal device 10 performs processing for adjusting the size of the window TW in response to a touch operation of the user in the adjustment area at the diagonal corner (i.e., catch corner) of the fixed corner. For example, as illustrated in FIG. 17, when the upper left corner of the window TW is set as a catch target (catch corner), the terminal device 10 changes the shape of the window TWc for size adjustment with the lower right corner as an anchor in response to a finger slide operation of the user in the adjustment area A. Specifically, the terminal device 10 changes the shape of the window TWc for size adjustment with the upper left direction when viewed from the minimum size window TWm as a scaling direction while maintaining the lower right corner, which is fixed corner, at the position.

Furthermore, when the user slides the touch position to another adjustment area, the terminal device 10 changes the catch target (catch corner) to a corner associated with the other adjustment area, and changes the setting of the fixed corner. In Pattern 2, the terminal device 10 changes the setting of the fixed corner to one of the four corners of the window TWo of the original size, that is, the diagonal corner of a corner associated with an adjustment area of a slide destination. For example, it is assumed that the user slides the touch position from the adjustment area A to the adjustment area G in FIG. 17. In this case, the terminal device 10 changes the catch target (catch corner) to the lower left corner, and changes the fixed corner to the upper right corner of the window TWo of the original size.

Table 2 illustrates the relation among the anchor (fixed corner), the catch target (catch corner), and the scaling direction in Pattern 2.

**(Table 2) Pattern 2**

| | Anchor | Catch target | Scaling direction |
|---|---|---|---|
| A | Lower right corner | Upper left corner | Upper left direction |
| B | Lower side (Capable of being displayed at lower right corner) | Upper side | Upper direction |
| C | Lower left corner | Upper right corner | Upper left direction |
| D | Right side (Capable of being displayed at lower right corner) | Left side | Left direction |
| E | Not provided (Capable of being displayed at lower right corner) | Not provided | Fixed (Not scalable) |
| F | Left side (Capable of being displayed at lower left corner) | Right side | Left direction |
| G | Upper right corner | Lower left corner | Lower left direction |
| H | Upper side (Capable of being displayed at upper right corner) | Lower side | Lower direction |
| I | Upper left corner | Lower right corner | Lower right direction |

In the table, A to I in a left end column correspond to the adjustment areas A to I in FIG. 17. The size adjustment operation of the terminal device 10 for each adjustment area will be specifically described below.

### (1) Adjustment Area A

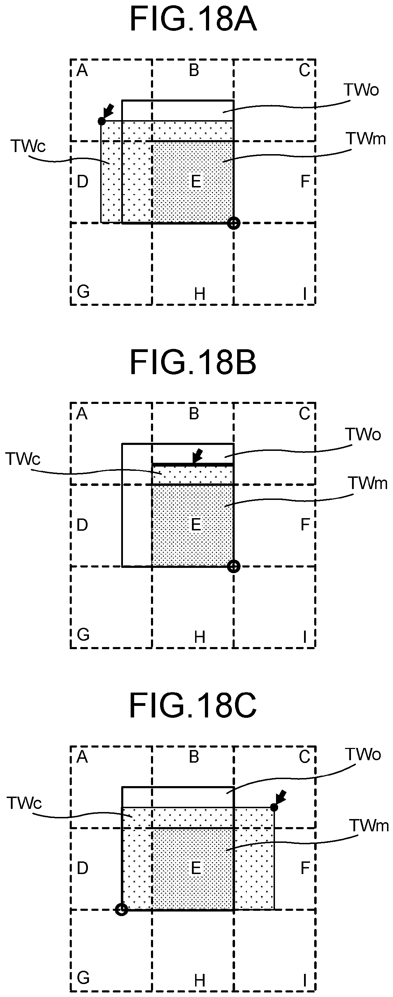

FIG. 18A illustrates a size adjustment operation in the adjustment area A. When the upper left corner of the window TW is set as a catch target (catch corner) by a touch operation of the user, the terminal device 10 sets the lower right corner, which is a diagonal corner thereof, as a fixed corner. The terminal device 10 changes the shape of the window TWc for size adjustment with the lower right corner as an anchor and the upper left direction when viewed from the minimum size window TWm as the scaling direction in response to the finger slide operation of the user in the adjustment area A.

### (2) Adjustment Area B

FIG. 18B illustrates a size adjustment operation in the adjustment area B. When a finger of the user is slid from another adjustment area to the adjustment area B, the terminal device 10 sets the upper side as a catch target, and sets the opposite lower side as an anchor. Note that the terminal device 10 may set the lower right corner as a fixed corner (anchor). The terminal device 10 changes the shape of the window TWc for size adjustment with the lower side (lower right corner) as an anchor and the upper direction when viewed from the minimum size window TWm as the scaling direction in response to the finger slide operation of the user in the adjustment area B.

### (3) Adjustment Area C

FIG. 18C illustrates a size adjustment operation in the adjustment area C. When a finger of the user is slid from another adjustment area to the adjustment area C, the terminal device 10 sets the upper right corner as a catch target, and sets the lower left corner, which is a diagonal corner thereof, as a fixed corner. The terminal device 10 changes the shape of the window TWc for size adjustment with the lower left corner as an anchor and the upper right direction when viewed from the minimum size window TWm as the scaling direction in response to the finger slide operation of the user in the adjustment area **C.**

### (4) Adjustment Area D

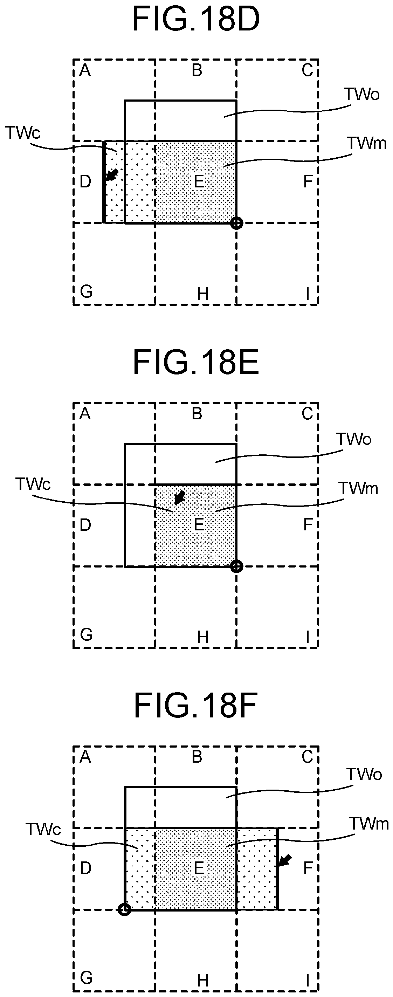

FIG. 18D illustrates a size adjustment operation in the adjustment area D. When a finger of the user is slid from another adjustment area to the adjustment area D, the terminal device 10 sets the left side as a catch target, and sets the opposite right side as an anchor. Note that the terminal device 10 may set the lower right corner as a fixed corner (anchor). The terminal device 10 changes the shape of the window TWc for size adjustment with the right side (lower right corner) as an anchor and the left direction when viewed from the minimum size window TWm as the scaling direction in response to the finger slide operation of the user in the adjustment area D.

### (5) Adjustment Area E

FIG. 18E illustrates a size adjustment operation in the adjustment area E. When a finger of the user is slid from another adjustment area to the adjustment area E, the terminal device 10 fixes the window TWc for size adjustment to a window having the same size as the minimum size window TWm.

### (6) Adjustment Area F

FIG. 18F illustrates a size adjustment operation in the adjustment area F. When a finger of the user is slid from another adjustment area to the adjustment area F, the terminal device 10 sets the right side as a catch target, and sets the opposite left side as an anchor. Note that the terminal device 10 may set the lower left corner as a fixed corner (anchor). The terminal device 10 changes the shape of the window TWc for size adjustment with the left side (lower left corner) as an anchor and the right direction when viewed from the minimum size window TWm as the scaling direction in response to the finger slide operation of the user in the adjustment area F.

### (7) Adjustment Area G

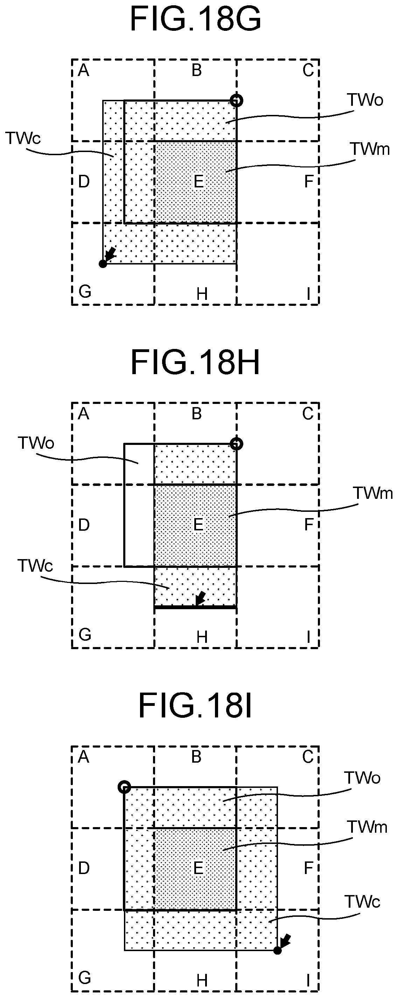

FIG. 18G illustrates a size adjustment operation in the adjustment area G. When a finger of the user is slid from another adjustment area to the adjustment area G, the terminal device 10 sets the lower left corner as a catch target, and sets the upper right corner, which is a diagonal corner thereof, as a fixed corner. The terminal device 10 changes the shape of the window TWc for size adjustment with the upper right corner as an anchor and the lower left direction when viewed from the minimum size window TWm as the scaling direction in response to the finger slide operation of the user in the adjustment area G.

### (8) Adjustment Area H

FIG. 18H illustrates a size adjustment operation in the adjustment area H. When a finger of the user is slid from another adjustment area to the adjustment area H, the terminal device 10 sets the lower side as a catch target, and sets the opposite upper side as an anchor. Note that the terminal device 10 may set the upper right corner as a fixed corner (anchor). The terminal device 10 changes the shape of the window TWc for size adjustment with the upper side (upper right corner) as an anchor and the lower direction when viewed from the minimum size window TWm as the scaling direction in response to the finger slide operation of the user in the adjustment area H.

### (9) Adjustment Area I

FIG. 18I illustrates a size adjustment operation in the adjustment area I. When a finger of the user is slid from another adjustment area to the adjustment area I, the terminal device 10 sets the lower right corner as a catch target, and sets the upper left corner, which is a diagonal corner thereof, as a fixed corner. The terminal device 10 changes the shape of the window TWc for size adjustment with the upper left corner as an anchor and the lower right direction when viewed from the minimum size window TWm as the scaling direction in response to the finger slide operation of the user in the adjustment area I.

According to Pattern 2, for example, an operation such as enlarging the window TW in the lower left direction with the upper right corner of the window TWo of the original size as a fixed corner can be performed by one action. Furthermore, according to Pattern 1, even when the user erroneously slides his/her finger to another adjustment area, the display state of the window TWc for size adjustment can be immediately returned to the original state if the user returns the finger to the original adjustment area.

### <4-4. Size Adjustment Operation (Pattern 3)>

In a case of Pattern 2, the adjustment areas are fixed at predetermined positions of the window TWo of the original size. An operation such as reducing the window TW by moving a catch corner in the upper right direction with the upper right corner as a fixed corner and the lower left corner as a catch corner thus cannot be performed. Therefore, in Pattern 3, the positions of the minimum size window TWm and the adjustment areas are changed in response to a touch operation of the user. A size adjustment operation of Pattern 3 will be described below.

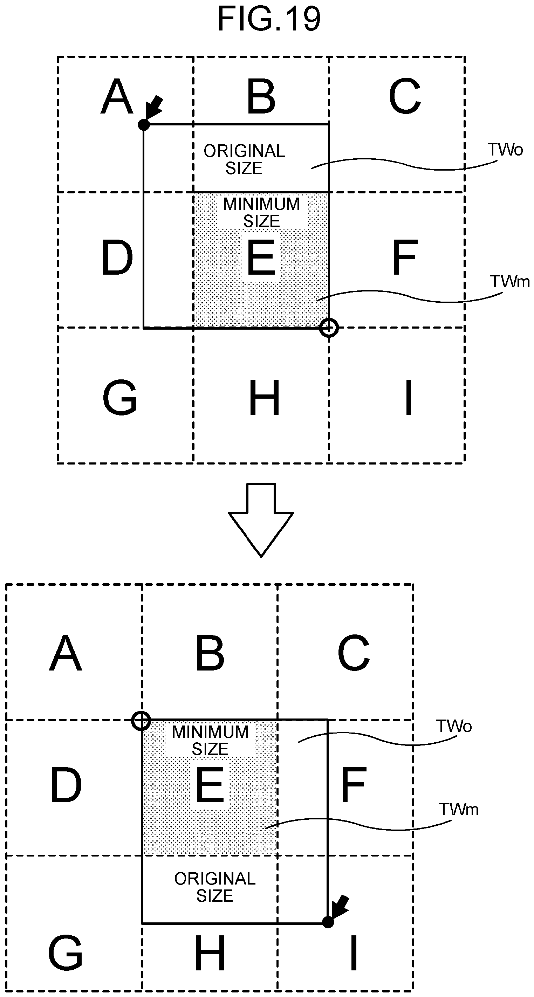

FIG. 19 illustrates the size adjustment operation of Pattern 3. FIG. 19 illustrates the relation between the window TW and the adjustment areas for adjusting the size of the window. The window TWo is a window of an original size. Setting of a minimum size window TWm is provided in the window TW.

In Pattern 3, the position of the minimum size window TWm changes within the area of the window TWo of the original size with a change of the fixed corner. Specifically, the area of the minimum size window TWm is located in an area obtained by reducing the window TWo of the original size to the minimum size with the current fixed corner as an anchor. For example, as illustrated in the upper diagram of FIG. 19, if the current catch target (catch corner) is the upper left corner, the area of the minimum size window TWm is located in an area obtained by reducing the window TWo of the original size to the minimum size with the lower right corner as an anchor.
Furthermore, as illustrated in the lower diagram of FIG. 19, if the current catch target (catch corner) changes to the lower right corner, the area of the minimum size window TWm is located in an area obtained by reducing the window TWo of the original size to the minimum size with the upper left corner as an anchor.

In the following description, the area obtained by reducing the window TWo of the original size to the minimum size with the lower right corner as an anchor is referred to as a lower right area. The area obtained by reducing the window TWo of the original size to the minimum size with the lower left corner as an anchor is referred to as a lower left area. The area obtained by reducing the window TWo of the original size to the minimum size with the upper right corner as an anchor is referred to as an upper right area. The area obtained by reducing the window TWo of the original size to the minimum size with the upper left corner as an anchor is referred to as an upper left area.

The terminal device 10 sets a plurality of adjustment areas for adjusting the size of the window TW for one window above. In the embodiment, the terminal device 10 sets adjustment areas at positions of at least four corners of the window TW. In the example of FIG. 19, adjustment areas A, C, G, and I are provided at the four corners of the window TW.

The adjustment area A corresponds to an adjustment area associated with the upper left corner of the window TW, and is located in the upper left direction of an area where the minimum size window TWm is located. The adjustment area C corresponds to an adjustment area associated with the upper right corner of the window TW, and is located in the upper right direction of the area where the minimum size window TWm is located. The adjustment area G corresponds to an adjustment area associated with the lower left corner of the window TW, and is located in the lower left direction of the area where the minimum size window TWm is located. The adjustment area I corresponds to an adjustment area associated with the lower right corner of the window TW, and is located in the lower right direction of the minimum size window TWm.

Furthermore, in the embodiment, in addition to these four adjustment areas, the terminal device 10 sets adjustment areas at positions of four sides of the window TW. In the example of FIG. 19, adjustment areas B, D, F, and H are provided at the four sides of the window TW.

The adjustment area B corresponds to an adjustment area associated with the upper side of the window TW, and is located in the upper direction of the area where the minimum size window TWm is located. The adjustment area D corresponds to an adjustment area associate with the left side of the window TW, and is located in the left direction of the area where the minimum size window TWm is located. The adjustment area F corresponds to an adjustment area associated with the right side of the window TW, and is located in the right direction of the area where the minimum size window TWm is located. The adjustment area H corresponds to an adjustment area associated with the lower side of the window TW, and is located in the lower direction of the area where the minimum size window TWm is located.

Moreover, in the embodiment, the terminal device 10 sets an adjustment area E in an area where the minimum size window TWm is located in addition to these eight adjustment areas.

As described above, the position of the minimum size window TWm changes within the area of the window TWo of the original size with a change of the fixed corner. Therefore, the boundary between adjustment areas changes as a hand of the user moves across an adjustment area. That is, in Pattern 3, the boundary differs between when the hand of the user moves from the original adjustment area to another adjustment area and when the hand of the user returns from the other adjustment area to the original adjustment area, which leads to a state just like a state in which hysteresis is provided. This can prevent the shape of the window TWc for size adjustment from frequently and greatly changing at the time when the hand of the user is located on the boundary between adjustment areas.

When the user touches the function icon F1, the terminal device 10 sets one of the four corners of the window TW as a catch target (catch corner), and sets one of the four corners of the window TW as a fixed corner (anchor) for size adjustment. In the embodiment, the terminal device 10 sets the diagonal corner of the catch corner as the fixed corner (anchor). For example, as illustrated in the upper diagram of FIG. 19, when the upper left corner of the window TW is set as a catch target (catch corner), the terminal device 10 sets the lower right corner, which is a diagonal corner thereof, as the fixed corner.

Then, the terminal device 10 performs processing for adjusting the size of the window TW in response to a touch operation of the user in the adjustment area at the diagonal corner (i.e., catch corner) of the fixed corner. For example, as illustrated in the upper diagram of FIG. 19, when the upper left corner of the window TW is set as a catch target (catch corner), the terminal device 10 changes the shape of the window TWc for size adjustment with the lower right corner as an anchor in response to a finger slide operation of the user in the adjustment area A. Specifically, the terminal device 10 changes the shape of the window TWc for size adjustment with the upper left direction when viewed from the minimum size window TWm as a scaling direction while maintaining the lower right corner, which is fixed corner, at the position.

Furthermore, when the user slides the touch position to another adjustment area, the terminal device 10 changes the catch target (catch corner) to a corner associated with the other adjustment area, and changes the setting of the fixed corner. In Pattern 3, the terminal device 10 changes the setting of the fixed corner to one of the four corners of the window TWo of the original size, that is, the diagonal corner of a corner associated with an adjustment area of a slide destination. For example, it is assumed that the user slides the touch position from the adjustment area A to the adjustment area G in FIG. 19. In this case, the terminal device 10 changes the catch target (catch corner) to the lower left corner, and changes the fixed corner to the upper right corner of the window TWo of the original size. Furthermore, the terminal device 10 changes the position of the minimum size window TWm within the area of the window TWo of the original size with a change of the fixed corner. Moreover, the terminal device 10 changes the setting of an adjustment area with the change of the fixed corner.

Table 3 illustrates the relation among the anchor (fixed corner), the catch target (catch corner), and the scaling direction in Pattern 3.

**(Table 3) Pattern 3**

| | Anchor | Catch target | Scaling direction |
|---|---|---|---|
| A | Lower right corner | Upper left corner | Upper left direction |
| B | Lower side (Hold original anchor position) | Upper side | Upper direction |
| C | Lower left corner | Upper right corner | Upper left direction |
| D | Right side (Hold original anchor position) | Left side | Left direction |
| E | Not provided (Hold original anchor position) | Not provided | Fixed (Not scalable) |
| F | Left side (Hold original anchor position) | Right side | Left direction |
| G | Upper right corner | Lower left corner | Lower left direction |
| H | Upper side (Hold original anchor position) | Lower side | Lower direction |
| I | Upper left corner | Lower right corner | Lower right direction |

In the table, A to I in a left end column correspond to the adjustment areas A to I in FIG. 19. The size adjustment operation of the terminal device 10 for each adjustment area will be specifically described below.

### (1) Adjustment Area A

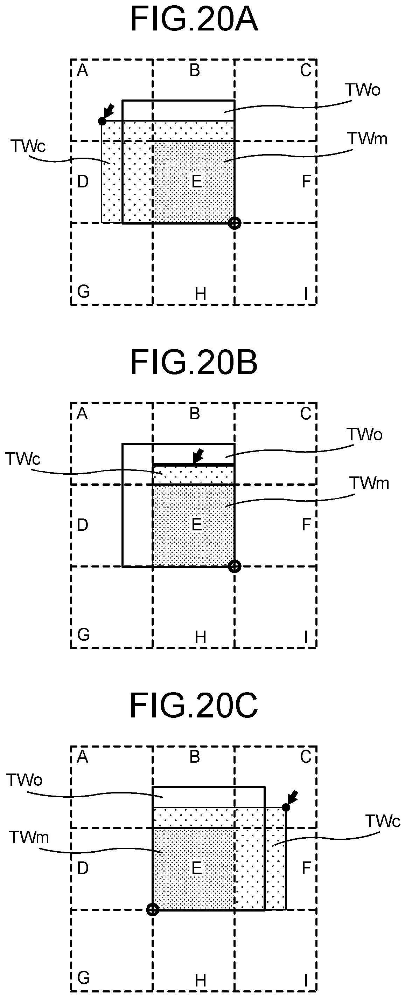

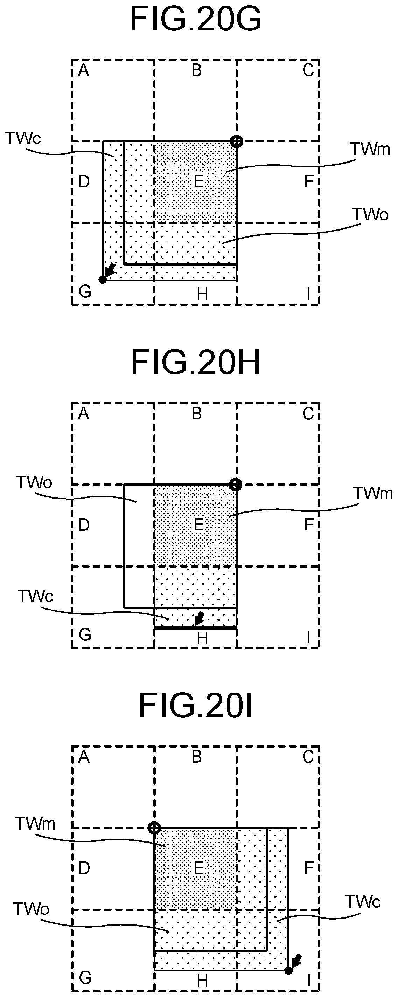

FIG. 20A illustrates a size adjustment operation in the adjustment area A. When the upper left corner of the window TW is set as a catch target (catch corner) by a touch operation of the user, the terminal device 10 sets the lower right corner, which is a diagonal corner thereof, as a fixed corner. When the setting of the minimum size window TWm is not provided in the lower right area of the window TWo of the original size, the terminal device 10 changes the setting of the minimum size window TWm to the lower right area. When the position of the minimum size window TWm is changed, the adjustment area is also changed accordingly. The terminal device 10 changes the shape of the window TWc for size adjustment with the lower right corner as an anchor and the upper left direction when viewed from the minimum size window TWm as the scaling direction in response to the finger slide operation of the user in the adjustment area A.

### (2) Adjustment Area B

FIG. 20B illustrates a size adjustment operation in the adjustment area B. When a finger of the user is slid from another adjustment area to the adjustment area B, the terminal device 10 sets the upper side as a catch target, and sets the opposite lower side as an anchor. Note that the terminal device 10 may directly set the fixed corner (anchor) in the adjustment area of a slide source as the fixed corner (anchor). For example, when a finger of the user is slid from the adjustment area A, the terminal device 10 sets the lower right corner as a fixed corner (anchor) as illustrated in FIG. 20B. In contrast, when a finger of the user is slid from the adjustment area C, the terminal device 10 sets the lower left corner as a fixed corner (anchor). The terminal device 10 changes the shape of the window TWc for size adjustment with the lower side (lower right corner or lower left corner) as an anchor and the upper direction when viewed from the minimum size window TWm as the scaling direction in response to the finger slide operation of the user in the adjustment area B.

### (3) Adjustment Area C

FIG. 20C illustrates a size adjustment operation in the adjustment area C. When a finger of the user is slid from another adjustment area to the adjustment area C, the terminal device 10 sets the upper right corner as a catch target, and sets the lower left corner, which is a diagonal corner thereof, as a fixed corner. When the setting of the minimum size window TWm is not provided in the lower left area of the window TWo of the original size, the terminal device 10 changes the setting of the minimum size window TWm to the lower left area. When the position of the minimum size window TWm is changed, the adjustment area is also changed accordingly. The terminal device 10 changes the shape of the window TWc for size adjustment with the lower left corner as an anchor and the upper right direction when viewed from the minimum size window TWm as the scaling direction in response to the finger slide operation of the user in the adjustment area C.

### (4) Adjustment Area D

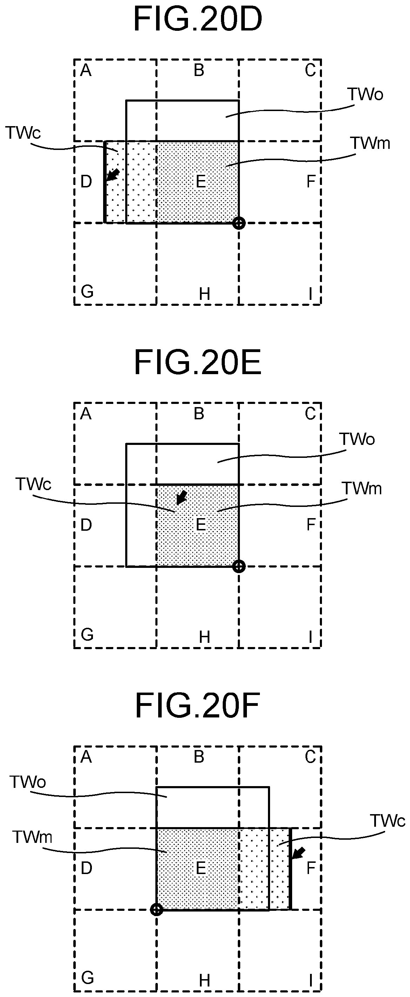

FIG. 20D illustrates a size adjustment operation in the adjustment area D. When a finger of the user is slid from another adjustment area to the adjustment area D, the terminal device 10 sets the left side as a catch target, and sets the opposite right side as an anchor. Note that the terminal device 10 may directly set the fixed corner (anchor) in the adjustment area of a slide source as the fixed corner (anchor). For example, when a finger of the user is slid from the adjustment area A, the terminal device 10 sets the lower right corner as a fixed corner (anchor) as illustrated in FIG. 20D. In contrast, when a finger of the user is slid from the adjustment area G, the terminal device 10 sets the upper right corner as a fixed corner (anchor). The terminal device 10 changes the shape of the window TWc for size adjustment with the right side (lower right corner or upper right corner) as an anchor and the left direction when viewed from the minimum size window TWm as the scaling direction in response to the finger slide operation of the user in the adjustment area D.

### (5) Adjustment Area E

FIG. 20E illustrates a size adjustment operation in the adjustment area E. When a finger of the user is slid from another adjustment area to the adjustment area E, the terminal device 10 fixes the window TWc for size adjustment to a window having the same size as the minimum size window TWm. Note that the terminal device 10 may directly set the fixed corner (anchor) in the adjustment area of a slide source as the fixed corner (anchor).

### (6) Adjustment Area F

FIG. 20F illustrates a size adjustment operation in the adjustment area F. When a finger of the user is slid from another adjustment area to the adjustment area F, the terminal device 10 sets the right side as a catch target, and sets the opposite left side as an anchor. Note that the terminal device 10 may directly set the fixed corner (anchor) in the adjustment area of a slide source as the fixed corner (anchor). For example, when a finger of the user is slid from the adjustment area C, the terminal device 10 sets the lower left corner as a fixed corner (anchor) as illustrated in FIG. 20F. In contrast, when a finger of the user is slid from the adjustment area I, the terminal device 10 sets the upper left corner as a fixed corner (anchor). The terminal device 10 changes the shape of the window TWc for size adjustment with the left side (lower left corner or upper left corner) as an anchor and the right direction when viewed from the minimum size window TWm as the scaling direction in response to the finger slide operation of the user in the adjustment area F.

### (7) Adjustment Area G

FIG. 20G illustrates a size adjustment operation in the adjustment area G. When a finger of the user is slid from another adjustment area to the adjustment area G, the terminal device 10 sets the lower left corner as a catch target, and sets the upper right corner, which is a diagonal corner thereof, as a fixed corner. When the setting of the minimum size window TWm is not provided in the upper right area of the window TWo of the original size, the terminal device 10 changes the setting of the minimum size window TWm to the upper right area. When the position of the minimum size window TWm is changed, the adjustment area is also changed accordingly. The terminal device 10 changes the shape of the window TWc for size adjustment with the upper right corner as an anchor and the lower left direction when viewed from the minimum size window TWm as the scaling direction in response to the finger slide operation of the user in the adjustment area G.

### (8) Adjustment Area H

FIG. 20H illustrates a size adjustment operation in the adjustment area H. When a finger of the user is slid from another adjustment area to the adjustment area H, the terminal device 10 sets the lower side as a catch target, and sets the opposite upper side as an anchor. Note that the terminal device 10 may directly set the fixed corner (anchor) in the adjustment area of a slide source as the fixed corner (anchor). For example, when a finger of the user is slid from the adjustment area G, the terminal device 10 sets the upper right corner as a fixed corner (anchor) as illustrated in FIG. 20H. In contrast, when a finger of the user is slid from the adjustment area I, the terminal device 10 sets the upper left corner as a fixed corner (anchor). The terminal device 10 changes the shape of the window TWc for size adjustment with the upper side (upper right corner or upper left corner) as an anchor and the lower direction when viewed from the minimum size window TWm as the scaling direction in response to the finger slide operation of the user in the adjustment area H.

### (9) Adjustment Area I

FIG. 18I illustrates a size adjustment operation in the adjustment area I. When a finger of the user is slid from another adjustment area to the adjustment area I, the terminal device 10 sets the lower right corner as a catch target, and sets the upper left corner, which is a diagonal corner thereof, as a fixed corner. When the setting of the minimum size window TWm is not provided in the upper left area of the window TWo of the original size, the terminal device 10 changes the setting of the minimum size window TWm to the upper left area. When the position of the minimum size window TWm is changed, the adjustment area is also changed accordingly. The terminal device 10 changes the shape of the window TWc for size adjustment with the upper left corner as an anchor and the lower right direction when viewed from the minimum size window TWm as the scaling direction in response to the finger slide operation of the user in the adjustment area I.

According to Pattern 3, the minimum size window is not fixed, which enables more flexible size adjustment. For example, the terminal device 10 can perform an operation such as reducing the window TW by moving a catch corner in the upper right direction with the upper right corner as a fixed corner and the lower left corner as the catch corner.

### <4-5. Highlight>

When the user changes the size of the window TW, the terminal device 10 may highlight the current fixed corner in order to make it easy for the user to see where the current fixed corner (anchor) is. Furthermore, the terminal device 10 may highlight two sides sandwiching the current catch corner (i.e., diagonal corner of current fixed corner) among the four sides of the window in order to make it easy for the user to see where the current catch corner is.

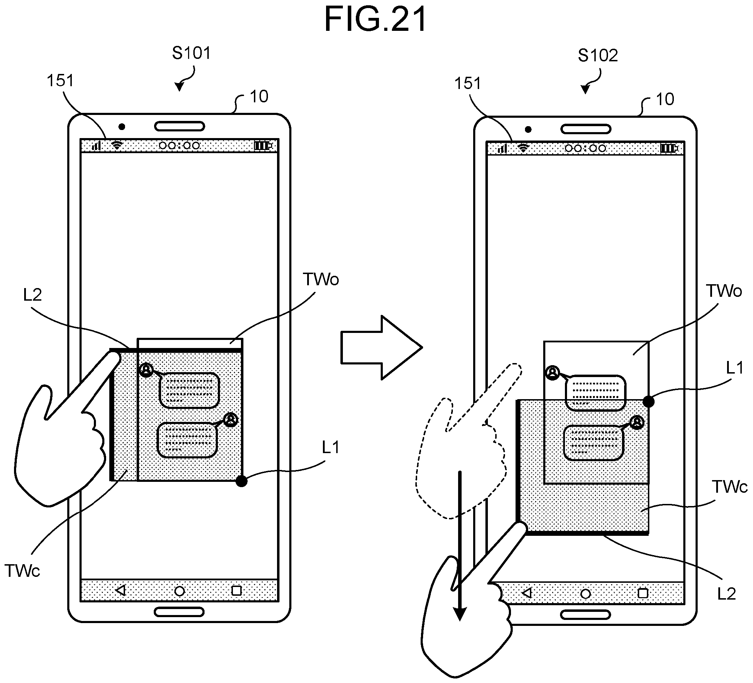

FIG. 21 illustrates one example of the highlight. FIG. 21 illustrates a display example of a case where one of four corners of the minimum window TWm is set as a fixed corner. In the example of FIG. 21, a highlight L1 and a highlight L2 are given to the window TWc for size adjustment. The highlight L1 highlights the current fixed corner. The highlight L2 highlights two sides sandwiching the current catch corner.

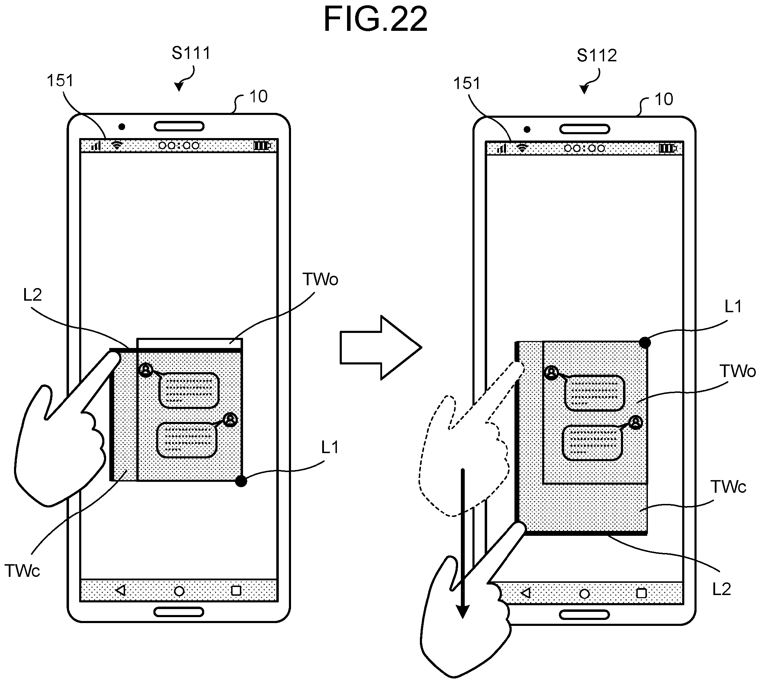

FIG. 22 illustrates another example of the highlight. FIG. 22 illustrates a display example of a case where one of four corners of the window TWo of the original size is set as a fixed corner. In the example of FIG. 22, a highlight L1 and a highlight L2 are given to the window TWc for size adjustment. The highlight L1 highlights the current fixed corner. The highlight L2 highlights two sides sandwiching the current catch corner.

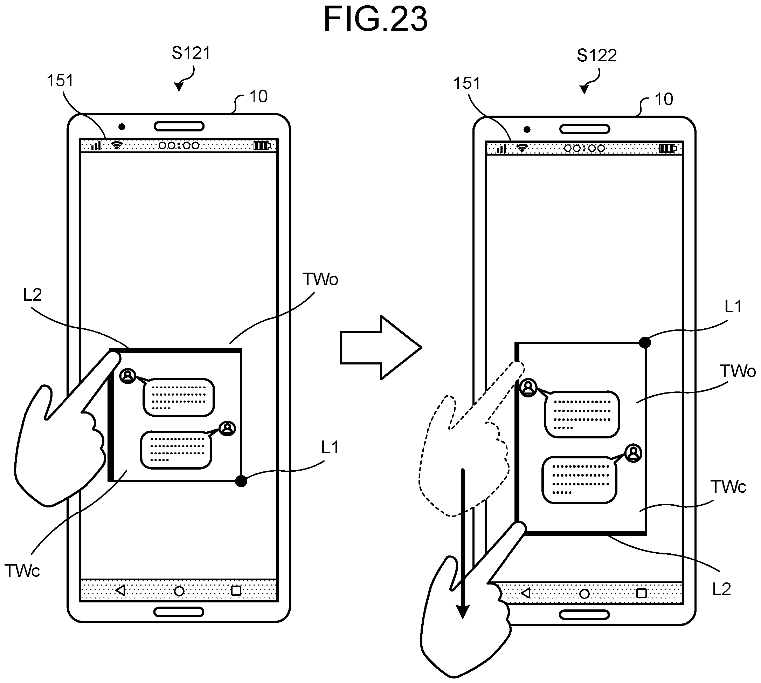

FIG. 23 illustrates another example of the highlight. FIG. 23 illustrates an example in which the terminal device 10 does not display the window TWc for size adjustment at the time when the function icon F1 is touched. In the example of FIG. 23, the terminal device 10 directly changes the size of the window TW in real time in response to a touch operation of the user. Also in this case, the terminal device 10 may directly give the highlight L1 and the highlight L2 to the window TW.

Note that, although, in the examples of FIGS. 21, 22, and 23, both the highlight L1 and the highlight L2 are given to the window, only one of the highlight L1 and the highlight L2 may be given to the window. Note that the highlight L1 and the highlight L2 in FIGS. 21, 22, and 23 are merely examples. Other displays such as changing colors of corners and sides may be used as highlights.

### <4-6. Guidance of Size Adjustment Method>

Since the above-described size adjustment method is slightly more complicated than conventional size adjustment methods, the user may continue to use the terminal device 10 without finding the method. Therefore, in order to notify the user of the method of adjusting the size of the window TW, the terminal device 10 guides the user to a page in which the size adjustment method is inquired (hereinafter, also referred to as utilization guide page) when a predetermined condition is satisfied.

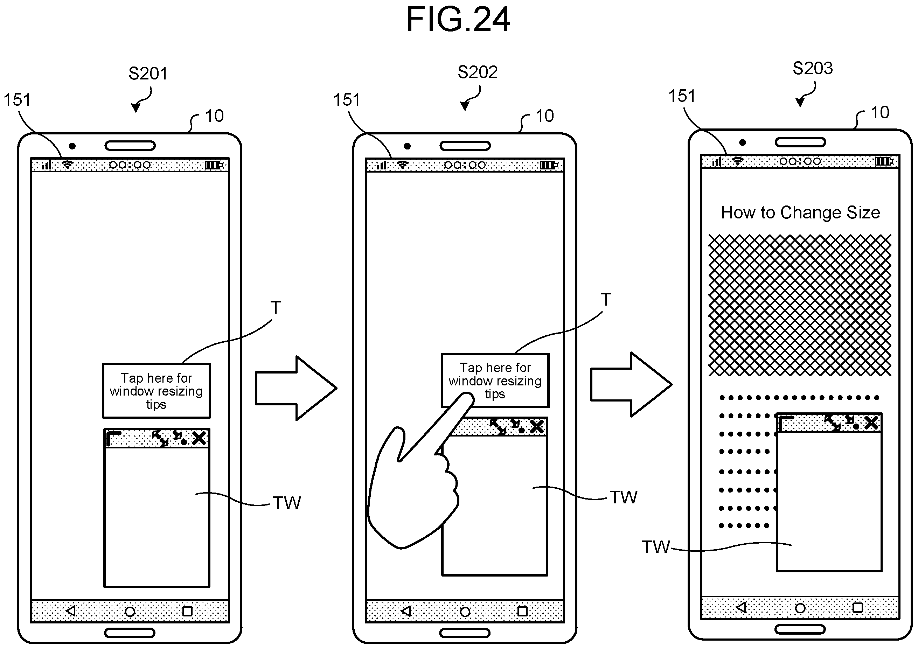

FIG. 24 outlines size adjustment method guidance processing. When the window TW is displayed on the display screen 151, guidance display for guiding the size adjustment method to the user is performed if it is determined that a preset condition is satisfied (Step S201). For example, the terminal device 10 displays a tool tip T in an upper portion of the window TW. A link to the utilization guide page may be set in the tool tip T. When the user taps the tool tip T (Step S202), the terminal device 10 displays the utilization guide page for introducing the size adjustment method to the user (Step S203).

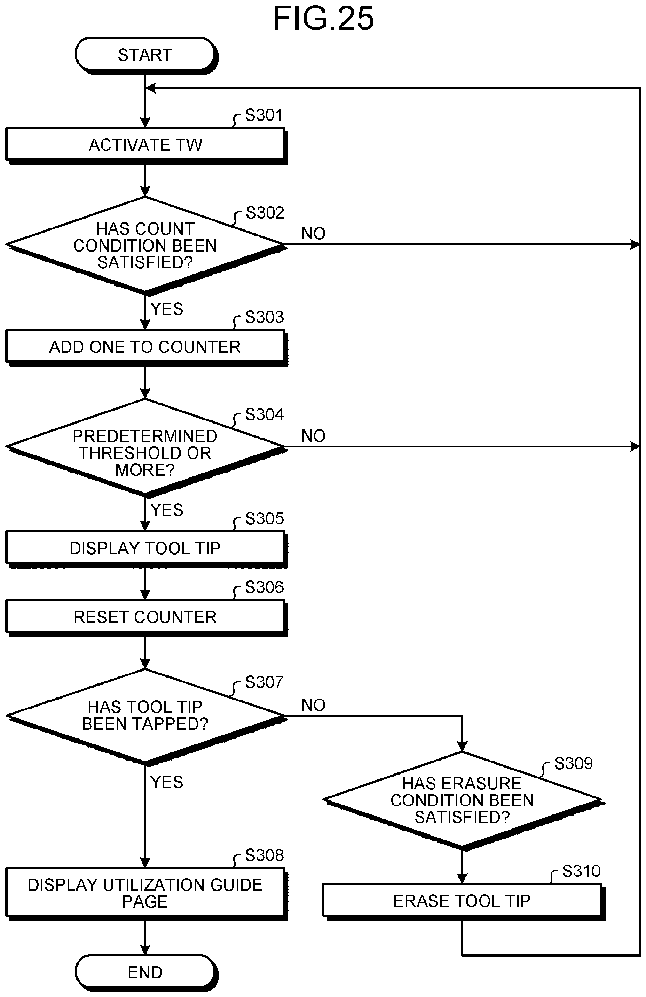

Although the size adjustment method guidance processing has been outlined above, details of the size adjustment method guidance processing will be described below. FIG. 25 is a flowchart illustrating the size adjustment method guidance processing. The size adjustment method guidance processing will be described below with reference to the flowchart of FIG. 25.

When the user performs a predetermined touch operation, the terminal device 10 activates the window TW (Step S301). Then, the terminal device 10 determines whether a count condition has been satisfied (Step S302).

In the embodiment, in order to be able to present a guidance of an operation method to the user at the timing when the user feels limitation or frustration with the size adjustment method, the number of predetermined user operations regarding the window TW is counted. Only when a counter reaches a predetermined number, the guidance display for notifying the user of the size adjustment method is performed.

Various conditions can be adopted as the count condition of the counter. For example, the terminal device 10 may count the number of times the window TW is newly activated at a default position. Furthermore, the timing when the counter performs counting is not limited to when the window TW is activated. For example, the terminal device 10 may count the number of times both window movement and size adjustment are performed from the activation to the closing of the window TW. Furthermore, the terminal device 10 may measure the time taken by the user for size adjustment, and may count the counter when the user has taken 20 seconds or more for size adjustment.

When the count condition is not satisfied (Step S302: No), the terminal device 10 returns the processing to Step S301. When the count condition is satisfied (Step S302: Yes), the terminal device 10 adds one to the counter (Step S303).

Next, the terminal device 10 determines whether the counter is a predetermined threshold or more (Step S304). The terminal device 10 determines whether the counter is 10 or more. The user or a developer can optionally determine the threshold. Furthermore, the threshold may be changed. For example, the threshold may be reset to a value larger or smaller than the current threshold after the tool tip T is displayed. When the counter is smaller than the predetermined threshold (Step S304: No), the terminal device 10 returns the processing to Step S301. When the counter is the predetermined threshold or more (Step S304: Yes), the terminal device 10 displays the tool tip T on the display screen 151 (step S305). Then, the terminal device 10 resets the counter (Step S306).

Subsequently, the terminal device 10 determines whether the tool tip T has been tapped (Step S307). When the tool tip T is tapped (Step S307: Yes), the terminal device 10 displays the utilization guide page for introducing the size adjustment method to the user (Step S308). When the display is completed, the terminal device 10 ends the size adjustment method guidance processing.

In contrast, when the tool tip T has not been tapped (Step S307: No), the terminal device 10 determines whether an erasure condition of the tool tip T has been satisfied (Step S309). Various conditions can be adopted as the erasure condition. For example, when the user performs a touch operation outside the tool tip T or a predetermined time (e.g., four seconds) elapses without an operation, the terminal device 10 may determine that the erasure condition of the tool tip T has been satisfied. When the erasure condition is not satisfied, the terminal device 10 returns the processing to Step S307. In contrast, when the erasure condition is satisfied, the terminal device 10 erases the tool tip (Step S310), and returns the processing to Step S301.

### <<5. Variations»

The above-described embodiment is one example, and various modifications and applications are possible.

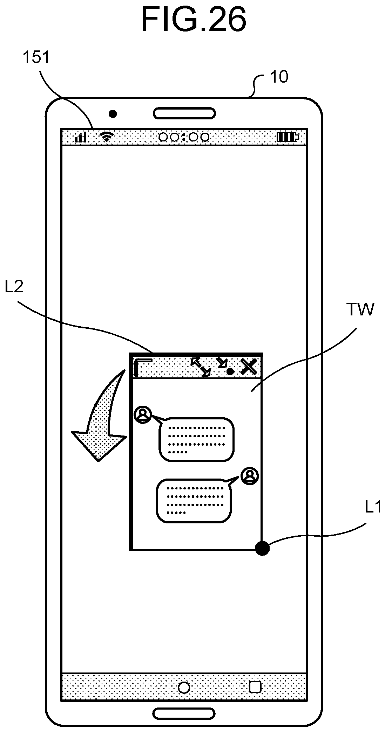

For example, in the above-described embodiment, the tool tip T has been displayed as guidance display for guiding the size adjustment method to the user. The guidance display is, however, not limited to the tool tip T, and may be an animation for guiding the size adjustment method to the user. FIG. 26 illustrates one example of the guidance display for guiding the size adjustment method to the user. For example, as illustrated in FIG. 26, the terminal device 10 may display an animation for notifying the user of a size adjustment function while the user performs size adjustment. In the example of FIG. 26, the terminal device 10 displays an arrow on the screen to notify the user that a size change operation handle can be moved further downward.

Furthermore, in the above-described embodiment, the terminal device 10 displays the window TWc for size adjustment as illustrated in, for example, FIG. 14 when the function icon F1 is touched. Then, the size of the window TWc for size adjustment is changed in response to the touch operation of the user. When the function icon F1 is touched, however, the terminal device 10 may directly change the size of the window TW in real time in response to a touch operation of the user without displaying the window TWc for size adjustment. In the case, the terminal device 10 may display the UI bar in the window TW, and is not required to display the UI bar in the window TW. Furthermore, the terminal device 10 may give the highlight L1 and/or highlight L2 to the window TW as illustrated in, for example, FIG. 26.

A control device that controls the terminal device 10 of the embodiment may be implemented by a dedicated computer system or a general-purpose computer system.

For example, a communication program for executing the above-described operation is stored in a computer-readable recording medium such as an optical disk, a semiconductor memory, a magnetic tape, and a flexible disk to be distributed. Then, for example, the program is installed in a computer, and the above-described processing is executed to constitute a control device. In the case, the control device may be a device (e.g., personal computer) outside the terminal device 10. Furthermore, the control device may be a device (e.g., control unit 13) inside the terminal device 10.

Furthermore, the above-described communication program may be stored in a disk device of a server device on a network such as the Internet so that the communication program can be, for example, downloaded to the computer. Furthermore, the above-described functions may be implemented by cooperation of an operating system (OS) and application software. In this case, a part other than the OS may be stored in a medium to be distributed, or the part other than the OS may be stored in a server device so that the part can be, for example, downloaded to the computer.

Furthermore, among pieces of processing described in the above-described embodiment, all or part of processing described as being performed automatically can be performed manually, or all or part of processing described as being performed manually can be performed automatically by a known method. In addition, the processing procedures, specific names, and information including various pieces of data and parameters in the above document and drawings can be optionally changed unless otherwise specified. For example, various pieces of information in each figure are not limited to the illustrated information.

Furthermore, each component of an illustrated device is functional and conceptual, and does not necessarily need to be physically configured as illustrated. That is, the specific form of distribution/integration of the device is not limited to the illustrated one, and all or part of the device can be configured in a functionally or physically distributed/integrated manner in any unit in accordance with various loads and use situations.

Furthermore, the above-described embodiment can be appropriately combined in a region where the processing contents do not contradict each other. Furthermore, the order of pieces of processing in the above-described embodiment can be appropriately changed.

Furthermore, for example, the embodiment can be carried out as any configuration constituting a device or a system, for example, a processor serving as a system large scale integration (LSI) or the like, a module using a plurality of processors or the like, a unit using a plurality of modules or the like, a set obtained by further adding other functions to the unit (i.e., configuration of part of device), and the like.

Furthermore, for example, the embodiment can adopt a configuration of cloud computing in which one function is shared and processed by a plurality of devices in cooperation via a network.

### «6. Conclusion»

As described above, according to one embodiment of the present disclosure, the terminal device 10 displays the resizable window TW on the display screen 151. Then, the terminal device 10 sets adjustment areas for size adjustment at positions of at least four corners of the window TW, and sets one of the four corners of the window TW as a fixed corner for size adjustment. Then, the terminal device 10 performs processing for adjusting the size of the window TW in response to a touch operation of the user in an adjustment area associated with a catch corner (i.e., diagonal corner of fixed corner). When the user slides a touch position to an adjustment area associated with another corner, the terminal device 10 changes the setting of the fixed corner to the diagonal corner of the other corner. This enables the user not only to perform size adjustment in one direction using an initial catch corner but perform size adjustments in other three directions.

Although the embodiment of the present disclosure has been described above, the technical scope of the present disclosure is not limited to the above-described embodiment as it is, and various modifications can be made without departing from the gist of the present disclosure. Furthermore, components of different embodiments and variations may be appropriately combined.

Furthermore, the effects in the embodiment described in the present specification are merely examples and not limitations. Other effects may be exhibited.

Note that the present technology can also have the configurations as follows.
(1) An information processing apparatus comprising:
   a display control unit that displays a window which is resizable on a touch panel display;
   a setting unit that sets adjustment areas for size adjustment of the window through a touch operation at positions of at least four corners of the window, and sets one of the four corners of the window as a fixed corner for the size adjustment; and
   a changing unit that performs processing for the size adjustment of the window in response to a touch operation of a user in an adjustment area associated with a diagonal corner of the fixed corner,
   wherein, when the user slides a touch position to an adjustment area associated with another corner, the setting unit changes setting of the fixed corner to a diagonal corner of the other corner.
(2) The information processing apparatus according to (1),
   wherein setting of a minimum size window is provided in the window, and
   the minimum size window is located in a fixed area in an area of the window of an original size.
(3) The information processing apparatus according to (2),
   wherein the minimum size window is located in an area obtained by reducing the window of an original size to a minimum size with an initial fixed corner as an anchor.
(4) The information processing apparatus according to (3),
   wherein a plurality of the adjustment areas is set for one window, and
   the setting unit sets at least:
      a first adjustment area that corresponds to an adjustment area associated with an upper left corner of the window and that is located in an upper left direction of an area where the minimum size window is located;
      a second adjustment area that corresponds to an adjustment area associated with an upper right corner of the window and that is located in an upper right direction of the area where the minimum size window is located;
      a third adjustment area that corresponds to an adjustment area associated with a lower left corner of the window and that is located in a lower left direction of the area where the minimum size window is located; and
      a fourth adjustment area that corresponds to an adjustment area associated with a lower right corner of the window and that is located in a lower right direction of the minimum size window.
(5) The information processing apparatus according to (4),
   wherein the setting unit further sets:
   a fifth adjustment area that corresponds to an adjustment area associated with an upper side of the window and that is located in an upper direction of an area where the minimum size window is located;
   a sixth adjustment area that corresponds to an adjustment area associated with a left side of the window and that is located in a left direction of the area where the minimum size window is located;
   a seventh adjustment area that corresponds to an adjustment area associated with a right side of the window and that is located in a right direction of the area where the minimum size window is located; and
   an eighth adjustment area that corresponds to an adjustment area associated with a lower side of the window and that is located in a lower direction of the area where the minimum size window is located.
(6) The information processing apparatus according to (5),
   wherein, when the user slides a touch position to an adjustment area associated with another corner, the setting unit changes setting of the fixed corner to a diagonal corner of the other corner, which is one of four corners of the minimum size window.
(7) The information processing apparatus according to (5),
   wherein, when the user slides a touch position to an adjustment area associated with another corner, the setting unit changes setting of the fixed corner to a diagonal corner of the other corner, which is one of four corners of the window of an original size.
(8) The information processing apparatus according to (1),
   wherein setting of a minimum size window is provided in the window, and
   a position of the minimum size window changes in an area of the window of an original size with a change of the fixed corner.
(9) The information processing apparatus according to (8),
   wherein the adjustment area changes with a change in position of the minimum size window.
(10) The information processing apparatus according to (8) or (9),
   wherein an area of the minimum size window is located in an area obtained by reducing the window of an original size to a minimum size with the current fixed corner as an anchor.
(11) The information processing apparatus according to (10),
   wherein a plurality of the adjustment areas is set for one window, and
   the setting unit sets at least:
      a first adjustment area that corresponds to an adjustment area associated with an upper left corner of the window and that is located in an upper left direction of an area where the minimum size window is located;
      a second adjustment area that corresponds to an adjustment area associated with an upper right corner of the window and that is located in an upper right direction of the area where the minimum size window is located;
      a third adjustment area that corresponds to an adjustment area associated with a lower left corner of the window and that is located in a lower left direction of the area where the minimum size window is located; and
      a fourth adjustment area that corresponds to an adjustment area associated with a lower right corner of the window and that is located in a lower right direction of the area where the minimum size window is located.
(12) The information processing apparatus according to (11),
   wherein the setting unit further sets:
   a fifth adjustment area that corresponds to an adjustment area associated with an upper side of the window and that is located in an upper direction of an area where the minimum size window is located;
   a sixth adjustment area that corresponds to an adjustment area associated with a left side of the window and that is located in a left direction of the area where the minimum size window is located;
   a seventh adjustment area that corresponds to an adjustment area associated with a right side of the window and that is located in a right direction of the area where the minimum size window is located; and
   an eighth adjustment area that corresponds to an adjustment area associated with a lower side of the window and that is located in a lower direction of the area where the minimum size window is located.
(13) The information processing apparatus according to (12),
   wherein, when the user slides a touch position to an adjustment area associated with another corner, the setting unit changes setting of the fixed corner to a diagonal corner of the other corner, which is one of four corners of the window of an original size.
(14) The information processing apparatus according to any one of (1) to (13),
   wherein a position of the initial fixed corner changes in accordance with a position of the window of an original size on the touch panel display.
(15) The information processing apparatus according to any one of (1) to (14),
   wherein the display control unit highlights the current fixed corner.
(16) The information processing apparatus according to any one of (1) to (15),
   wherein the display control unit highlights two sides sandwiching a diagonal corner of the current fixed corner among four sides of the window.
(17) The information processing apparatus according to any one of (1) to (16),
   wherein, when the window is displayed on the touch panel display, the display control unit performs guidance display for notifying a user of a method of adjusting a size of the window in a case where a predetermined condition is satisfied.
(18) The information processing apparatus according to (17),
   wherein the display control unit counts a number of predetermined operations of a user related to the window, and
   when the window is displayed on the touch panel display, performs guidance display for notifying a user of a method of changing a size of the window in a case where the predetermined operations are performed a predetermined number of times.
(19) An information processing method comprising:
   a display control step of displaying a window which is resizable on a touch panel display;
   a setting step of setting adjustment areas for size adjustment of the window through a touch operation at positions of at least four corners of the window, and setting one of the four corners of the window as a fixed corner for the size adjustment; and
   an adjustment step of performing processing for the size adjustment of the window in response to a touch operation of a user in an adjustment area associated with a diagonal corner of the fixed corner,
   wherein, in the setting step, when the user slides a touch position to an adjustment area associated with another corner, setting of the fixed corner is changed to a diagonal corner of the other corner.
(20) A program causing a computer to function as:
   a display control unit that displays a window which is resizable on a touch panel display;
   a setting unit that sets adjustment areas for size adjustment of the window through a touch operation at positions of at least four corners of the window, and sets one of the four corners of the window as a fixed corner for the size adjustment; and
   a changing unit that performs processing for the size adjustment of the window in response to a touch operation of a user in an adjustment area associated with a diagonal corner of the fixed corner,
   wherein, when the user slides a touch position to an adjustment area associated with another corner, the setting unit changes setting of the fixed corner to a diagonal corner of the other corner.

### Reference Signs List

- 10: TERMINAL DEVICE
- 11: COMMUNICATION UNIT
- 12: STORAGE UNIT
- 13: CONTROL UNIT
- 14: INPUT UNIT
- 15: OUTPUT UNIT
- 131: SETTING UNIT
- 132: CHANGING UNIT
- 141, 142: SENSOR REGION
- 151: DISPLAY SCREEN
- A1: UPPER REGION
- A2: CENTRAL REGION
- A3: LOWER REGION
- N: UI BAR
- TW: WINDOW
- TWo: WINDOW OF ORIGINAL SIZE
- TWm: MINIMUM SIZE WINDOW
- TWc: WINDOW FOR SIZE ADJUSTMENT
- L1, L2: HIGHLIGHT
- F1 to F4: FUNCTION ICON
- SP: NON-DISPLAY REGION
- P: PIVOT

## Claims

1. An information processing apparatus comprising:
a display control unit that displays a window which is resizable on a touch panel display;
a setting unit that sets adjustment areas for size adjustment of the window through a touch operation at positions of at least four corners of the window, and sets one of the four corners of the window as a fixed corner for the size adjustment; and
a changing unit that performs processing for the size adjustment of the window in response to a touch operation of a user in an adjustment area associated with a diagonal corner of the fixed corner,
wherein, when the user slides a touch position to an adjustment area associated with another corner, the setting unit changes setting of the fixed corner to a diagonal corner of the other corner.

2. The information processing apparatus according to claim 1,
wherein setting of a minimum size window is provided in the window, and
the minimum size window is located in a fixed area in an area of the window of an original size.

3. The information processing apparatus according to claim 2,
wherein the minimum size window is located in an area obtained by reducing the window of an original size to a minimum size with an initial fixed corner as an anchor.

4. The information processing apparatus according to claim 3,
wherein a plurality of the adjustment areas is set for one window, and
the setting unit sets at least:
a first adjustment area that corresponds to an adjustment area associated with an upper left corner of the window and that is located in an upper left direction of an area where the minimum size window is located;
a second adjustment area that corresponds to an adjustment area associated with an upper right corner of the window and that is located in an upper right direction of the area where the minimum size window is located;
a third adjustment area that corresponds to an adjustment area associated with a lower left corner of the window and that is located in a lower left direction of the area where the minimum size window is located; and
a fourth adjustment area that corresponds to an adjustment area associated with a lower right corner of the window and that is located in a lower right direction of the minimum size window.

5. The information processing apparatus according to claim 4,
wherein the setting unit further sets:
a fifth adjustment area that corresponds to an adjustment area associated with an upper side of the window and that is located in an upper direction of an area where the minimum size window is located;
a sixth adjustment area that corresponds to an adjustment area associated with a left side of the window and that is located in a left direction of the area where the minimum size window is located;
a seventh adjustment area that corresponds to an adjustment area associated with a right side of the window and that is located in a right direction of the area where the minimum size window is located; and
an eighth adjustment area that corresponds to an adjustment area associated with a lower side of the window and that is located in a lower direction of the area where the minimum size window is located.

6. The information processing apparatus according to claim 5,
wherein, when the user slides a touch position to an adjustment area associated with another corner, the setting unit changes setting of the fixed corner to a diagonal corner of the other corner, which is one of four corners of the minimum size window.

7. The information processing apparatus according to claim 5,
wherein, when the user slides a touch position to an adjustment area associated with another corner, the setting unit changes setting of the fixed corner to a diagonal corner of the other corner, which is one of four corners of the window of an original size.

8. The information processing apparatus according to claim 1,
wherein setting of a minimum size window is provided in the window, and
a position of the minimum size window changes in an area of the window of an original size with a change of the fixed corner.

9. The information processing apparatus according to claim 8,
wherein the adjustment area changes with a change in position of the minimum size window.

10. The information processing apparatus according to claim 8,
wherein an area of the minimum size window is located in an area obtained by reducing the window of an original size to a minimum size with the current fixed corner as an anchor.

11. The information processing apparatus according to claim 10,
wherein a plurality of the adjustment areas is set for one window, and
the setting unit sets at least:
a first adjustment area that corresponds to an adjustment area associated with an upper left corner of the window and that is located in an upper left direction of an area where the minimum size window is located;
a second adjustment area that corresponds to an adjustment area associated with an upper right corner of the window and that is located in an upper right direction of the area where the minimum size window is located;
a third adjustment area that corresponds to an adjustment area associated with a lower left corner of the window and that is located in a lower left direction of the area where the minimum size window is located; and
a fourth adjustment area that corresponds to an adjustment area associated with a lower right corner of the window and that is located in a lower right direction of the area where the minimum size window is located.

12. The information processing apparatus according to claim 11,
wherein the setting unit further sets:
a fifth adjustment area that corresponds to an adjustment area associated with an upper side of the window and that is located in an upper direction of an area where the minimum size window is located;
a sixth adjustment area that corresponds to an adjustment area associated with a left side of the window and that is located in a left direction of the area where the minimum size window is located;
a seventh adjustment area that corresponds to an adjustment area associated with a right side of the window and that is located in a right direction of the area where the minimum size window is located; and
an eighth adjustment area that corresponds to an adjustment area associated with a lower side of the window and that is located in a lower direction of the area where the minimum size window is located.

13. The information processing apparatus according to claim 12,
wherein, when the user slides a touch position to an adjustment area associated with another corner, the setting unit changes setting of the fixed corner to a diagonal corner of the other corner, which is one of four corners of the window of an original size.

14. The information processing apparatus according to claim 1,
wherein a position of the initial fixed corner changes in accordance with a position of the window of an original size on the touch panel display.

15. The information processing apparatus according to claim 1,
wherein the display control unit highlights the current fixed corner.

16. The information processing apparatus according to claim 1,
wherein the display control unit highlights two sides sandwiching a diagonal corner of the current fixed corner among four sides of the window.

17. The information processing apparatus according to claim 1,
wherein, when the window is displayed on the touch panel display, the display control unit performs guidance display for notifying a user of a method of adjusting a size of the window in a case where a predetermined condition is satisfied.

18. The information processing apparatus according to claim 17,
wherein the display control unit counts a number of predetermined operations of a user related to the window, and
when the window is displayed on the touch panel display, performs guidance display for notifying a user of a method of changing a size of the window in a case where the predetermined operations are performed a predetermined number of times.

19. An information processing method comprising:
a display control step of displaying a window which is resizable on a touch panel display;
a setting step of setting adjustment areas for size adjustment of the window through a touch operation at positions of at least four corners of the window, and setting one of the four corners of the window as a fixed corner for the size adjustment; and
an adjustment step of performing processing for the size adjustment of the window in response to a touch operation of a user in an adjustment area associated with a diagonal corner of the fixed corner,
wherein, in the setting step, when the user slides a touch position to an adjustment area associated with another corner, setting of the fixed corner is changed to a diagonal corner of the other corner.

20. A program causing a computer to function as:
a display control unit that displays a window which is resizable on a touch panel display;
a setting unit that sets adjustment areas for size adjustment of the window through a touch operation at positions of at least four corners of the window, and sets one of the four corners of the window as a fixed corner for the size adjustment; and
a changing unit that performs processing for the size adjustment of the window in response to a touch operation of a user in an adjustment area associated with a diagonal corner of the fixed corner,
wherein, when the user slides a touch position to an adjustment area associated with another corner, the setting unit changes setting of the fixed corner to a diagonal corner of the other corner.
